# EUROPEAN PATENT APPLICATION

(11) **EP 4 707 032 A1**
(43) Date of publication of application: **11.03.2026**
(21) Application number: 25196216.3
(22) Date of filing: 15.08.2025
(51) Int. Cl.: B60L 3/00, B60L 1/00, H01M 10/48, B60L 58/26, H02J 1/00, B60L 53/14, B60L 3/12, B60L 53/10, B60L 53/20, B60L 58/13, B60L 58/16, B60L 58/19, B60L 58/22, B60L 58/20, H01M 10/44, B60L 58/27, H02J 7/00, H02J 7/82, H02J 7/52, H02J 7/50

(54) **ELECTRIC VEHICLE RANGE EXTENDER INTEGRATION**

(30) Priority: 15.08.2024 US 202418805805
(71) Applicant: Tesla, Inc., Austin, TX 78725 (US)
(72) Inventor: MORRILL, Westbrook, Austin, Texas, 78725 (US); MARLIN, Eliakim Saul, Austin, Texas, 78725 (US); NORDGREN, Carl Alexander, Austin, Texas, 78725 (US); COHEN, Justin Ty, Austin, Texas, 78725 (US)
(74) Representative: Bryn-Jacobsen, Caelia

(57) **Abstract**

Example methods to manage a plurality of battery packs of an electric vehicle include initiating a charging process for a primary battery pack and an auxiliary battery pack, determining that an Open Circuit Voltage (OCV) of the primary battery pack matches an OCV of the auxiliary battery pack, and based on determining that the OCV of the primary battery pack matches the OCV of the auxiliary battery, connecting the primary and auxiliary battery packs in parallel and initiating parallel charging of the primary battery pack and the auxiliary battery pack.

## Description

### BACKGROUND

Electric vehicles (EVs) have become increasingly popular as a sustainable alternative to internal combustion engine (ICE) vehicles, primarily due to their lower emissions and reduced dependency on fossil fuels. The core components that define the functionality of EVs include the electric motor, the battery pack, and the power electronics that manage energy flow within the vehicle.

The electric motor in an EV converts electrical energy into mechanical energy to propel the vehicle. Unlike ICE vehicles, which rely on the combustion of fuel to generate power, electric motors provide instant torque, resulting in quick acceleration and a smooth driving experience. Electric motors are also more energy-efficient than their ICE counterparts, as they convert a higher percentage of electrical energy into mechanical work with fewer energy losses.

The battery pack is the energy storage system of an EV, providing the necessary electrical energy to the motor. Modern EV battery packs are predominantly composed of lithium-ion cells, which offer a favorable energy-to-weight ratio, high energy efficiency, and good high-temperature performance. The capacity of the battery pack is a primary factor in determining the vehicle's range, which is the distance an EV can travel on a single charge. Battery technology continues to evolve, with research focused on increasing energy density, reducing charging times, improving safety, and extending the lifespan of the cells.

Power electronics in EVs include various components such as inverters, converters, and charging systems. An inverter converts the DC power from the battery pack to AC power to drive the electric motor. Conversely, a converter, specifically a DC/DC converter, steps down the high-voltage DC from the battery to a lower voltage to power the vehicle's auxiliary systems, such as lighting, infotainment, and climate control.

Charging infrastructure is another aspect of the EV ecosystem. EVs can be charged using AC power from the grid at home or public charging stations, or DC fast-charging stations that provide rapid charging capabilities. AC charging typically involves onboard chargers that convert AC power to DC to charge the battery pack. DC fast-charging stations perform this conversion externally, delivering DC power directly to the vehicle's battery system, which allows for much faster charging times.

The charging process is managed by the vehicle's onboard charging system, which communicates with the charging station to control the rate of charge based on the battery's current state of charge, temperature, and other parameters. This system ensures that the battery is charged safely and efficiently, optimizing for battery health and longevity.

The architecture of the EV powertrain, including the voltage levels at which the vehicle operates, has implications for the design of the vehicle's power electronics and charging systems. Higher voltage systems can offer advantages such as reduced current for the same power output, which can lead to smaller and lighter wiring harnesses, improved efficiency, and potentially faster charging capabilities.

As the demand for EVs continues to grow, the industry is focused on addressing challenges such as improving the energy density of batteries, expanding charging infrastructure, reducing charging times, and enhancing vehicle range.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
**FIG. 1** is a schematic diagram illustrating an overall architecture of an electric vehicle power system, according to some examples.
**FIG. 2** is a system diagram illustrating integration of a range extender with the main vehicle coolant loop, according to some examples.
**FIG. 3** is a flowchart illustrating a method for managing power distribution in an electric vehicle with a range extender, according to some examples.
**FIG. 4** is a flowchart illustrating a method for managing power delivery in an electric vehicle with an auxiliary battery pack, according to some examples.
**FIG. 5** is a flowchart illustrating a method of optimizing power delivery from a range extender in an electric vehicle, according to some examples.
**FIG. 6** is a flowchart illustrating a method of transitioning control strategies in an electric vehicle's charging system, according to some examples.
**FIG. 7** is a flowchart illustrating a method of managing dual battery charging in electric vehicles, according to some examples.
**FIG. 8** illustrates a perspective view of a vehicle, depicted as a truck, which includes an auxiliary battery pack, according to some examples.
**FIG. 9** depicts a side view of a vehicle towing a trailer, according to some examples, where an auxiliary battery pack is installed within the trailer.
**FIG. 10** shows a high-voltage controller integrated with a power converter and a set of sensors, according to some examples, for managing power delivery and monitoring in an electric vehicle.
**FIG. 11** is a system diagram illustrating an architecture of an electric vehicle (EV), according to some examples.
**FIG. 12** is a diagrammatic representation of a machine in the form of a computer system within which a set of instructions may be executed for causing the machine to perform any one or more of the methodologies discussed herein, in accordance with some examples.

### DETAILED DESCRIPTION

### Overview

In the realm of electric vehicles (EVs), a common hurdle faced by consumers is the concern over range anxiety-the apprehension that the vehicle may run out of power before reaching a charging station or destination. To address this and other issues, an electric vehicle having multiple batteries (e.g., a primary battery located within the electric vehicle itself, and a secondary battery located in an electrically-coupled EV range extender) and associated charging and discharging methods are disclosed herein, according to some examples. A range extender provides a supplementary or secondary battery system that can be incorporated into or coupled to various types of electric vehicles, providing additional energy to extend the driving range.

For example, in the case of an electric pickup truck, which may be used in high-demand situations such as towing, the range extender may be beneficial when integrated into the bed of the pickup, thereby enhancing the vehicle's range while still allowing full use of the cargo area for hauling loads.

A range extender works in tandem with the vehicle's primary high-voltage battery system. It may connect to the vehicle's DC inlet, which may also be designed to accommodate wireless charging capabilities. This design allows for an increased driving range as needed by the user and may address range anxiety and facilitate longer journeys without the necessity of frequent charging breaks.

Example auxiliary battery systems, such as may be included within a range extender, include several components, including a lower-voltage (e.g., 400V) secondary battery pack that is a compact yet high-capacity battery unit that stores the supplemental energy required for extending vehicle range. The range extender may be engineered to fit within the constraints of the vehicle's design, ensuring that the space remains functional for other uses. Example auxiliary battery systems may also be accommodated within a trailer or other accessory device that is electrically coupled to the vehicle's primary high-voltage battery system.

Example auxiliary battery systems may include one or more power conversion systems that operate in parallel to manage the flow of electricity between the auxiliary battery pack and the vehicle's main battery pack. These power conversion systems may, for example, convert a lower-voltage output (e.g., a 400V output) of the range extender to align with the higher voltage system (e.g., 800V) of a main or primary battery, facilitating energy transfer and use. In some examples, multiple power conversion systems are used in parallel to increase DC-DC power output, which can improve performance for high-demand scenarios such as towing and hill climbing.

In some examples, the integration of an MC4 connector allows for the direct connection of solar panels, harnessing renewable energy to charge the range extender battery and further reducing the environmental impact of electric vehicles.

The described examples further seek to address challenges in managing multiple battery systems for electric vehicles, for example when preparing for high-speed charging. Examples include a control system that switches between at least two strategies: state of energy (SOE) balancing and Open Circuit Voltage (OCV) matching.

During regular driving, the control system employs the SOE balancing strategy. This approach seeks to maintain an equal state of energy between a primary battery pack and an auxiliary battery pack, or between any two or more battery packs, such as first and second battery packs. The system adjusts the power output from the auxiliary battery pack to match the total power demand of the vehicle. This adjustment is scaled by the ratio of remaining energy in the auxiliary battery pack to the total remaining energy in both battery packs. This method seeks to provide balanced energy usage across multiple battery systems during certain driving scenarios.

The control system switches to the OCV matching strategy when the vehicle's navigation system detects that the destination is a high-speed charger. This change is triggered, for example, when the user inputs a destination into the vehicle's navigation system through the user interface, and that destination is identified as a high-speed charging station.

The OCV matching strategy actively manages the discharging of both battery packs to equalize their respective open circuit voltages. This preparation allows for faster initiation of parallel charging upon arrival at the high-speed charger, potentially reducing charging times and improving the overall charging experience.

Several components may work together to implement these strategies, for example:
- A primary high-voltage controller acts as an orchestrator of communications between a charger, a primary pack, and an auxiliary pack.
- The auxiliary high-voltage controller measures the OCV of the auxiliary battery pack and relays this information to the high-voltage controller to inform decision-making.
- The power electronics are adjusted to tune voltage outputs of the primary battery pack and the auxiliary battery pack based on feedback from voltage sensors.
- Voltage sensors provide feedback to the control system about the current voltage levels of both battery packs.
- The navigation system detects when the vehicle's destination is set to a high-speed charger, triggering the switch in control strategies.

Example processes of switching between strategies and preparing for high-speed charging can include several operations. Example processes may begin when the user inputs a destination into the vehicle's navigation system through the user interface. Upon receiving this input, the navigation system analyzes the destination to determine if it corresponds to a high-speed charger location.

Once the navigation system confirms that the destination is a high-speed charger, it communicates this information to the high-voltage controller. Upon receiving this data, the high-voltage controller initiates a switch from the State of Energy (SOE) balancing strategy to the Open Circuit Voltage (OCV) matching strategy. This transition marks a shift in the vehicle's power management approach to prepare for the upcoming high-speed charging session.

Following this strategy shift, the control system begins actively managing the discharging of both the primary and auxiliary battery packs. A goal of this management is to equalize the Open Circuit Voltages (OCVs) of both battery packs. This equalization process may enable efficient parallel charging upon arrival at the high-speed charger.

Throughout this process, the auxiliary high-voltage controller continuously measures the OCV of the auxiliary battery pack and relays this information to the main high-voltage controller. This constant communication ensures that the high-voltage controller has up-to-date information about the state of both battery packs.

The high-voltage controller may use this real-time information to make informed decisions about power distribution and charging preparation. These decisions seek to optimize the vehicle's energy usage and ensure it arrives at the charging station in a state for rapid charging.

Based on the feedback from voltage sensors, the power electronics may be continuously adjusted. These adjustments fine-tune the voltage outputs of both the primary and auxiliary battery packs. This ongoing process ensures that the battery packs maintain a predetermined voltage level as the vehicle approaches the charging destination.

Example processes continue until the vehicle arrives at the high-speed charger. By the time of arrival, both battery packs may have equalized OCVs. This equalization prepares the vehicle for rapid parallel charging, potentially reducing overall charging time and improving the charging experience.

The OCV matching strategy employs various methods of voltage matching and rapid switching. Example systems may include contactors that are designed to allow the vehicle to charge at significantly higher rates than would otherwise be possible, further enhancing the efficiency of the charging process. When the vehicle approaches a charging station, sensors, and control units within the vehicle can communicate with the charging station to ascertain the voltage and current characteristics of the supply. If there is a discrepancy between the supply and the vehicle's battery voltage, the system may adjust the voltage through converters before the contactors close. This pre-alignment of voltages seeks to provide a smooth and safe start to the charging process.

The described examples include various methods for detecting that a destination is a high-speed charger. For example, the vehicle's navigation system may detect that the destination is set to a high-speed charger when the user inputs the destination through the navigation software user interface. The system may have a database of known high-speed charging locations and match the input destination against this database.

In some examples. The vehicle may receive real-time data from charging network providers about the locations and types of chargers available. When a destination is set, the system cross-references this data to determine if the destination includes a high-speed charger.

In some examples. As the vehicle approaches the destination, it may communicate with nearby charging infrastructure using vehicle-to-infrastructure (V2I) technology. This communication could provide information about the type of charger available, allowing the vehicle to detect high-speed chargers. Some example systems may use machine learning algorithms to predict whether a destination is likely to have a high-speed charger based on historical data, location type, and other contextual information.

The described examples also incorporate advanced autonomous driving features that assist in detecting and navigating to high-speed chargers. The system may utilize machine learning algorithms to predict optimal charging locations based on the vehicle's current state of charge, driving conditions, and user preferences.

The described examples represent an approach to managing multiple battery systems of or available to electric vehicles that adapts to different driving and charging scenarios. By switching between SOE balancing and OCV matching strategies, example systems aim to optimize both regular driving efficiency and high-speed charging preparation.

Further, example auxiliary battery systems seek to address several challenges in EV technology, including extending the driving range of electric vehicles, including electric pickups, making them more suitable for extended travel and demanding tasks such as towing. Examples may also offer users the flexibility to install the range extender when additional range is anticipated, avoiding the constant burden of a larger, heavier battery.

Moreover, a range extender may help address limitations in charging infrastructure. In regions with sparse charging options, the extra range may allow drivers to comfortably reach their destinations or locate a charging station without the worry of depleting their battery.

### Power system 100

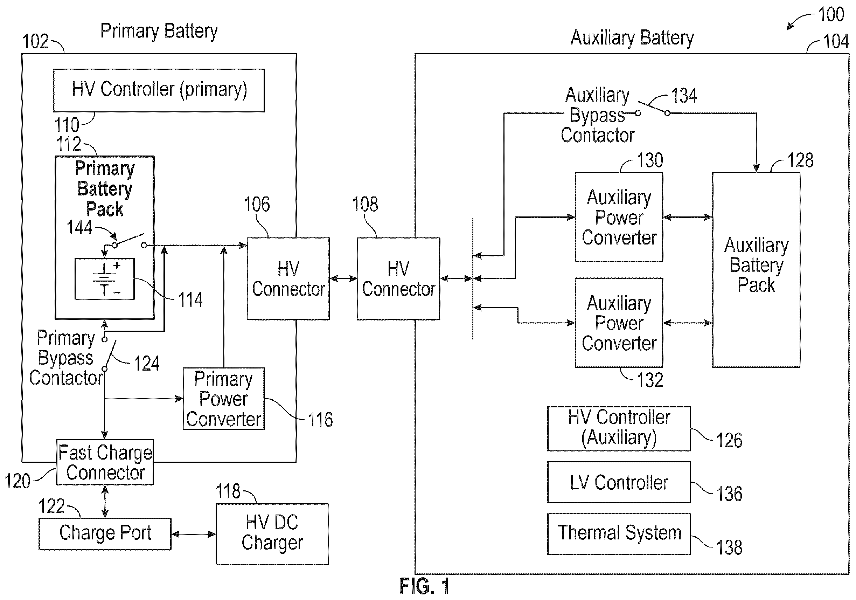

FIG. 1 is a system diagram showing a detailed view of a power system 100 for a vehicle or structure, according to some examples. This diagram illustrates the integration and operational dynamics of a primary battery 102 and an auxiliary battery 104 (e.g., a range extender), which are interconnected through various components and connections to enhance the vehicle's power management and efficiency.

The primary battery 102 is equipped with a primary high-voltage controller 110, which serves as the central unit for managing high-voltage charging operations. This primary high-voltage controller 110 is connected to a primary battery pack 112, a DPDT switch 114, and a primary power converter 116. The primary high-voltage controller 110 orchestrates communications and decision-making processes between a high-voltage DC charger 118, the primary battery 102, and the auxiliary battery 104.

Charging of the primary battery 102 is facilitated via a fast charge connector 120 and a charge port 122 of vehicle 1102, linking it to the high-voltage DC charger 118. The fast charge connector 120 and charge port 122 allow the vehicle 1102 to use various levels of charging infrastructure. The fast charge connector 120 is designed to accommodate high-power charging, compatible with Level 3 DC Fast Charging stations, which can deliver power outputs ranging from 50 kW to 500 kW. Additionally, the charge port 122 provides flexibility for Level 2 charging, suitable for home or public charging stations with a 240-volt supply.

Moreover, the vehicle's charging system may support even higher voltage levels, such as those provided by Tesla's proprietary charging stations, which can supply voltages of 400V or higher. Such chargers are capable of delivering fast charging speeds. For instance, Tesla's V3 Superchargers, which can operate at up to 250 kW, and V4 Superchargers may deliver up to 500 kW or more.

A main vehicle fast charge contractor 124 is controlled by the primary high-voltage controller 110 to selectively connect or disconnect the primary battery pack 112 and the auxiliary battery pack 128 from the charging lines and the high-voltage DC charger 118. The main vehicle fast charge contractor 124 allows for controlled high-voltage charging or isolation of the primary battery pack 112 and the auxiliary battery pack 128, depending on the operational requirements.

A primary pack contractor 144 further enables the primary battery pack 112 to be selectively coupled or decoupled from the charge port 122, while allowing high-voltage charging of the auxiliary battery 104 (e.g., when the main vehicle fast charge contractor 124 is closed, but the primary pack contractor 144 is open and an auxiliary bypass contactor 134 is closed).

The DPDT (Double Pole Double Throw) switch 114 manages the configuration of the primary battery pack 112 between series and parallel modes. This switch allows the vehicle to adapt its battery configuration to different charging and driving conditions by altering the connection of the battery cells in the primary battery pack 112. In series mode, the voltage of the battery pack is increased, which is beneficial for enhancing the vehicle's driving range and performance. Conversely, in parallel mode, the voltage is reduced, which is advantageous for compatibility with certain charging infrastructures that require lower voltages.

During operation, when the vehicle approaches a charging station, the DPDT switch 114 assesses the required charging voltage and automatically adjusts the battery configuration to match the charger's specifications. For instance, if the charger is a high-voltage type, the switch will configure the battery pack in series to accept the higher voltage efficiently. If the charger operates at a lower voltage, the switch will set the battery pack to parallel mode to ensure safe and effective charging.

Transitioning to the auxiliary battery 104, it includes an auxiliary high-voltage controller 126 that is communicatively coupled to and mirrors the functionality of the primary power converter 116. This auxiliary high-voltage controller 126 is also responsible for monitoring the voltage levels of the auxiliary battery pack 128 and communicating this data to the primary high-voltage controller 110 to inform decision-making processes.

The high-voltage connectors (HVCs) 108 of the auxiliary battery 104 are linked to a dual setup of power converters (PCSs), specifically the auxiliary power converters 130 and 132. These converters are arranged in parallel, enhancing the power transfer capabilities of the power system 100. This parallel connection of power conversion systems (PCSs) is designed to manage and optimize the power output or input, for example in scenarios that demand high power, such as heavy towing, rapid acceleration, or regenerative braking.

Each of the auxiliary power converter 130 and auxiliary power converter 132 is capable of both stepping up and stepping down voltage levels, thereby ensuring that the auxiliary battery can effectively supplement the primary battery during high-demand scenarios.

In some examples, the auxiliary power converters 130 and 132 are used during discharge to boost the voltage of the auxiliary battery pack 128 from a nominal 400V to match the 800V voltage of the primary auxiliary battery pack 128 during drive mode. This allows for efficient energy transfer and use of the auxiliary battery's capacity, even when the vehicle is under a significant load. The parallel arrangement of the auxiliary power converters 130 and 132 not only doubles the available power output of the auxiliary battery pack 128 but also provides redundancy, enhancing the reliability of the power system. The control algorithms within the auxiliary high-voltage controller 126 dynamically adjust the operation of these converters 130 and 132 based on real-time performance data, providing efficiency and preventing overheating or other potential issues.

Paralleling the auxiliary power converter 130 and auxiliary power converter 132 may include synchronizing output or input currents to achieve equal load distribution across the converters. Control algorithms within the auxiliary high-voltage controller 126 dynamically adjust the operation of each auxiliary power converter 130 and 132 based on their performance metrics.

The auxiliary power converters 130 and 132 can handle both DC-to-DC and AC-to-DC conversion. This dual functionality allows them to adapt to various power supply conditions and requirements.

In the DC-to-DC conversion mode, the auxiliary power converters 130 and 132 adjust the voltage levels between the battery systems within the vehicle. For example, if the auxiliary battery pack 128 operates at a lower voltage, such as 400V, and needs to interface with a higher voltage main battery system at 800V, these converters step up the voltage to match the system requirements. The converters include power electronic components like IGBTs or MOSFETs, which switch the DC input across a transformer or inductor at high frequencies to achieve the voltage transformation. The output is then rectified and smoothed to ensure a stable and reliable DC supply.

The transition between these two operational modes (DC-to-DC and AC-to-DC) is managed by control circuitry within each converter, which uses real-time data from voltage and current sensors to adjust the operation of the converters.

Additionally, the auxiliary battery 104 incorporates one or more auxiliary bypass contactors 134, positioned on a charge line between the high-voltage connector (HVC) 108 and the auxiliary battery pack 128. The auxiliary bypass contactor 134 enables direct charging of the auxiliary battery pack 128 from a high-voltage DC charger 118, providing flexibility in how the battery packs 112 and 128 are charged, either in parallel or individually, depending on the state and charging requirements.

The auxiliary bypass contactor 134 (to bypass auxiliary power converter 130 and auxiliary power converter 132) provides an alternative pathway for charging that bypasses the primary battery pack 112. This may be useful in scenarios where the auxiliary battery pack 128 needs to be charged independently of the primary battery pack 112, such as, for example when the primary battery is near full capacity or when optimizing charge times based on the auxiliary battery's state of charge and temperature conditions. The auxiliary bypass contactor 134 operates under the control of the auxiliary high-voltage controller 126, which dynamically manages its engagement based on real-time data from both battery systems.

In operation, when the vehicle is connected to a high-voltage DC charger 118 at a charging station, the auxiliary high-voltage controller 126 evaluates the voltage levels and state of charge of both primary and auxiliary battery packs 112 and 128. If it determines that direct charging of the auxiliary battery 104 is more efficient or necessary, it activates the auxiliary bypass contactor 134. This direct connection allows the auxiliary battery 104 to receive the full charging current directly from the high-voltage DC charger 118, effectively isolating it from the primary battery pack 112 and enabling faster charging rates.

The auxiliary battery 104 is also equipped with a low-voltage controller 136 and a thermal system 138, further supporting the robust operation of the vehicle's power system by managing lower voltage operations and thermal conditions, respectively.

The low-voltage controller 136 may be responsible for managing the auxiliary systems of a vehicle. Such auxiliary systems operate at lower voltages, such as vehicle lighting, infotainment systems, and other electronic components that do not require the high-voltage supplied to the main and auxiliary battery packs. The low-voltage controller 136 enables systems to receive a stable and regulated power supply, safeguarding against fluctuations that could arise from the high-voltage operations.

The thermal system 138 operatively manages the heat generated by the auxiliary battery 104 during operation and charging. It includes components such as coolant fluids, pumps, and radiators that work together to dissipate heat.

In operation, the thermal system 138 circulates coolant through the battery cells to absorb heat. The heated coolant is then pumped through a radiator where it is cooled before being recirculated. This continuous flow seeks to ensure that the battery temperature remains within safe operational limits, enhancing the overall efficiency and longevity of the battery system. Additionally, the system can be adjusted based on external temperature conditions and the battery's thermal load, providing dynamic thermal management that adapts to varying environmental and operational demands.

During the charging process, in some examples, the switches and contactors within the power system 100 facilitate the flow of electrical energy from an external charger 9e.g., high-voltage DC charger 118) to the vehicle's batteries (e.g., primary battery 102 and auxiliary battery 104) by at least three methods:

**DC to DC Conversion Method:**
- In this method, bidirectional DC-to-DC converters in the primary power converter 116, auxiliary power converter 130, and auxiliary power converter 132 manage the voltage levels during the charging process. When the vehicle is connected to a charging station, the auxiliary power converters 130 adjust the incoming voltage to match the requirements of the auxiliary battery pack 128 (e.g., 400V).
- The auxiliary power converter 130 and auxiliary power converter 132, which form part of a larger power conversion system, operate in a 'step-up' mode to increase the voltage from the charging station to the level required by the main vehicle battery (e.g., 800V) if necessary, or 'step-down' the voltage to charge the secondary battery pack (400V).
- During charging, the auxiliary power converters 130 and 132 ensure that the secondary battery is charged at an appropriate rate by modulating the voltage and current according to the battery's state of charge and temperature.

**Direct Connection to Charge Inlet Method:**
- For direct charging, the auxiliary battery pack 128 (e.g., a 400V pack) may connected to the fast charge connector 120 using auxiliary bypass contactors 134 that bypasses the auxiliary power converter 130 and auxiliary power converter 132. These contactors or switches may each be a mechanical relay or a solid-state device that closes to establish a direct connection.
- Once an auxiliary bypass contactor 134 is closed, the charging current flows directly from the fast charge connector 120 to the secondary auxiliary battery pack 128, allowing it to charge at a same or increased rate relative to the primary battery pack 112.
- This method seeks to eliminate the need for voltage conversion and can be particularly efficient when the charging station's output voltage closely matches that of the secondary battery pack (e.g., 400V).

**Parallel Connection of Battery Packs Method:**
- In the parallel connection method, switches or contactors (e.g., DPDT switch 114, main vehicle fast charge contractors 124, and auxiliary bypass contactors 134) are used to configure the primary and secondary battery packs in a parallel arrangement. This includes closing contactors that connect the two halves of the primary battery pack 112 (which can operate in both series and parallel modes) and the auxiliary battery pack 128 in parallel to the charging circuit.
- When the vehicle is connected to a high-voltage DC charger 118, the switches ensure that all battery packs are aligned in terms of voltage levels, allowing them to be charged simultaneously. This is achieved by matching the open-circuit voltages (OCV) of the batteries before connecting them in parallel. The Open Circuit Voltage (OCV) of a battery pack refers to the voltage measured across the terminals of the battery pack when it is not connected to any load or charging source. It represents the potential difference between the positive and negative terminals of the battery pack in its resting state. The OCV may provide information about the battery's state of charge and be used in control strategies for managing multiple battery systems in electric vehicles.
- The parallel charging setup is managed by a control system, including the primary high-voltage controller 110 and the auxiliary high-voltage controller 126, which monitors the voltage and temperature of each battery pack.

### Power system 200

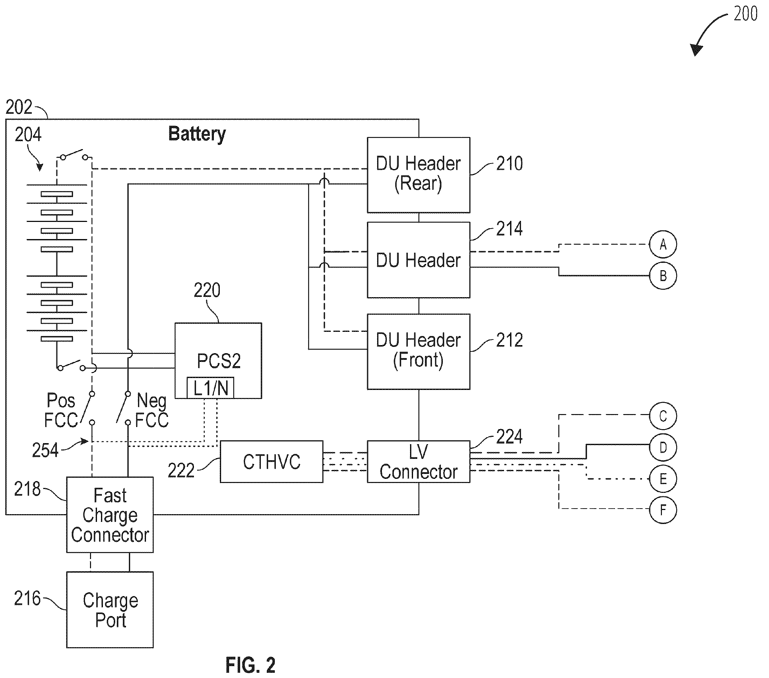

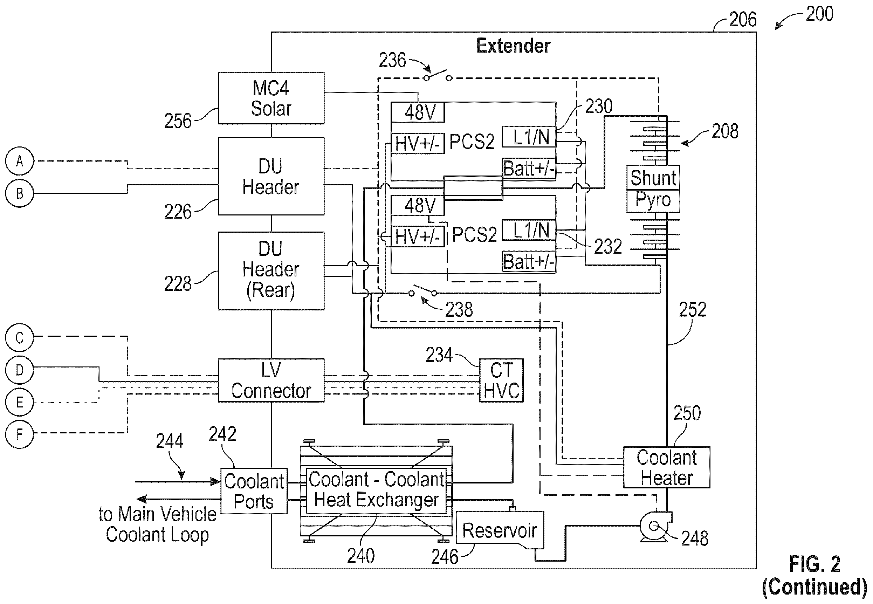

FIG. 2 is a schematic diagram showing a power system 200 for an electric vehicle (EV), according to some examples. The power system 200 may comprise a more specific example of the power system 100, described with reference to FIG. 1. The power system 200 comprises a primary battery system 202 (e.g., having an 800V primary battery pack 204) and an auxiliary battery system 206 (e.g., having a 400V auxiliary battery pack 208).

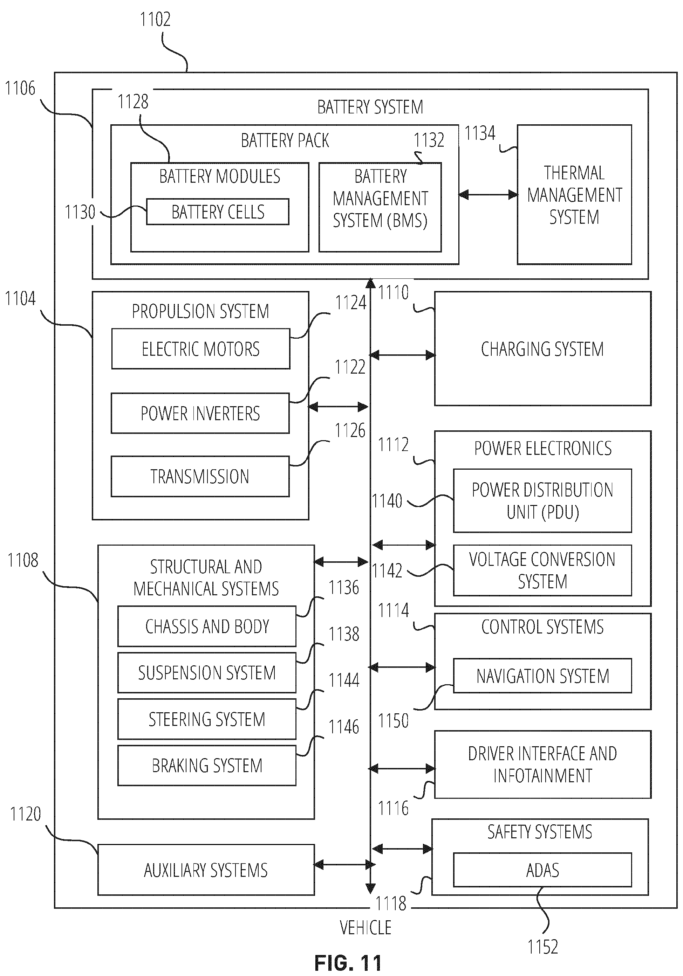

The primary battery pack 204 of the primary battery system 202 serves as a main energy storage unit for a vehicle, providing high-voltage DC power to a propulsion system 1104 of the vehicle 1102 (see FIG. 11). It interfaces with the connectors in the form of a rear drive unit header 210 and the front drive unit header 212, which are responsible for distributing power to the vehicle's electric motors. The auxiliary drive unit header 214 may provide an additional connection point for power distribution or for integrating additional powertrain components.

This primary battery pack 204 is composed of multiple battery modules that are configured to deliver voltage and current required for the vehicle's operations. The rear drive unit header 210 and the front drive unit header 212 are equipped with high-current handling capabilities to transmit power to the electric motors.

The auxiliary drive unit header 214, while serving as an additional point for power distribution, enables the integration of supplementary powertrain components, such as an additional motor or a specialized energy storage system, which may be used for enhancing vehicle performance or for specific functionalities like regenerative braking systems.

Each of these headers is connected to the primary battery pack 204 through a system of conductive busbars and secured connectors.

In the primary battery system 202, the charge port 216 is electrically coupled to the fast charge connector 218, which serves as an intermediary connection point for primary battery system 202. The charge port 216 acts as the vehicle's interface for receiving external electrical power, which is then directed through the fast charge connector 218. The fast charge connector 218 is designed to handle high-power connections and may be used for rapid charging scenarios where large amounts of power are transferred over a short period.

The fast charge connector 218 provides compatibility with various charging standards and may include features such as communication pins for handshake protocols with charging stations. This connector enables the transfer of electrical energy from the charge port 216 to the power conversion system 220 and the primary battery pack 204.

In some examples, the power conversion system 220 may include multiple power electronic components such as onboard chargers, DC/DC converters, and associated control hardware. These components are responsible for converting the alternating current (AC) received from the charge port 216 to DC, stepping down or stepping up the voltage to match the requirements of the primary battery pack 204, and managing the charging process to optimize battery health and longevity.

Additionally, power can be provided directly from the fast charge connector 218 to the primary battery pack 204 when the received power is already in the appropriate DC form, such as from a DC fast-charging station. This direct path allows for more rapid charging by minimizing conversion losses and reducing the time required to charge the primary battery pack 204.

As noted above, the primary battery pack 204 is also connected to the rear drive unit header 210, the front drive unit header 212, and the auxiliary drive unit header 214. These headers are electrical interfaces that distribute power from the primary battery pack 204 to the vehicle's drive units. In some examples, the rear drive unit header 210 and the front drive unit header 212 may be connected to electric motors that drive the rear and front wheels, respectively, while the auxiliary drive unit header 214 may provide a connection point for an additional motor or other powertrain components.

The rear drive unit header 210, the front drive unit header 212, and the auxiliary drive unit header 214 may include high-current connectors and cabling designed to handle power flows required for vehicle propulsion.

In some examples, the headers may also incorporate safety features such as isolation switches or fuses to protect against electrical faults. The design of these headers takes into account the dynamic conditions of vehicle operation, including vibrations, temperature fluctuations, and the need for reliable, long-term performance.

The primary battery system 202 further comprises a primary high-voltage controller 222 and a low-voltage connector 224. The low-voltage connector 224 is directly coupled to the fast charge connector 218, providing a pathway for low-voltage electrical systems within the vehicle.

The primary high-voltage controller 222 serves as an interface for high-voltage signals for the operation of the vehicle's high-voltage components, such as the electric motor and power electronics. The low-voltage connector 224, on the other hand, is responsible for the distribution of low-voltage power, for example, in the 12V to 48V range, to support auxiliary systems such as lighting, sensors, and the vehicle's infotainment system.

The auxiliary battery pack 208 of the auxiliary battery system 206 functions as a range extender, offering additional energy storage capacity to increase the vehicle's driving range. It is connected to the vehicle's power system through the extender drive unit header 226 and the rear drive unit header 228. These headers facilitate the transfer of electrical energy between the auxiliary battery pack 208 and the vehicle's powertrain.

The auxiliary battery system 206 incorporates a pair of power conversion systems (PCSs), specifically a first power conversion system 230 and a second power conversion system 232 (PCSs). These systems are connected in parallel with each other and with the auxiliary battery pack 208, which serves as an auxiliary energy storage unit to supplement the primary battery system 202.

The first power conversion system 230 and the second power conversion system 232 function as electrical interfaces that facilitate the conversion of electrical energy to the appropriate form and voltage for use by the vehicle's powertrain or for charging the auxiliary battery pack 208. The parallel connection with the auxiliary battery pack 208 allows for increased redundancy and power handling capability.

The first power conversion system 230 and the second power conversion system 232 may each include components such as bidirectional DC/DC converters that allow for both charging of the auxiliary battery pack 208 and discharging to support the vehicle's electrical load. The parallel configuration evenly distributes load between the two converters, which may improve efficiency and provide a backup in case one system fails. These converters are capable of both stepping up and stepping down voltage levels, depending on the direction of power flow. In the case of charging the auxiliary battery pack 208, the converters may step down the voltage from a high-voltage charging source. Conversely, when providing power to the vehicle's drive units, they may step up the voltage to match the requirements of the high-voltage primary battery system.

The first power conversion system 230 and the second power conversion system 232 may use the same Power Conversion System (PCS) technology as the onboard charger (e.g., the power conversion system 220). These PCS units may be employed in an AC/DC stage configuration, repurposed to serve as DC/DC converters. Within the auxiliary battery system 206, the first power conversion system 230 and the second power conversion system 232 may manage the voltage transition of the auxiliary battery pack 208, enabling it to interface with a main pack DC Link voltage (800V) during vehicle operation.

As noted above, the first power conversion system 230 and second power conversion system 232 may be used in a parallel configuration. This arrangement provides increased discharge power to effectively use the energy stored in the auxiliary battery pack 208 during scenarios that demand higher power, such as towing and road trips involving elevation changes. The parallel connection of the PCSs 230 and 232 allows for a greater power output than would be possible with just a single unit. This assists the auxiliary battery pack 208 in delivering its stored energy to the vehicle's powertrain system when additional power is required without overloading any single PCS unit.

The PCS units 230 and 232 are each capable of converting the DC voltage from the auxiliary battery pack 208 to the higher voltage level required by the primary battery system 202. By operating in parallel, these units can share the power conversion load, thereby providing a higher total power output to support the vehicle's energy demands during high-load conditions.

The first power conversion system 230 and the second power conversion system 232 may be equipped with semiconductor devices such as insulated-gate bipolar transistors (IGBTs) or metal-oxide-semiconductor field-effect transistors (MOSFETs) that switch at high frequencies to efficiently convert voltages. These systems may also include passive components like inductors and capacitors to smooth out the voltage and current, as well as control algorithms that control the power flow based on various operating conditions.

An auxiliary high-voltage controller 234 is responsible for orchestrating the operation of the PCS units 230 and 232, using algorithms to balance the load between them and to respond dynamically to changes in power requirements. This includes monitoring the state of charge and temperature of the auxiliary battery pack 208 to optimize discharge rates and protect the battery cells from excessive stress.

The extender drive unit header 226 and the rear drive unit header 228 are also connected to both the first power conversion system 230 and the second power conversion system 232. These connectors provide the physical and electrical linkage necessary for the transfer of power between the auxiliary battery pack 208 and the vehicle's drive units.

In some examples, the power system may be augmented with components such as bypass contactors, specifically identified as positive bypass contactor 236 and negative bypass contactor 238. These contactors provide an alternative electrical pathway, enabling the auxiliary battery pack 208 to interface directly with external charging stations through the fast charge connector 218 and power conversion system 220, independent of the primary battery pack 204. This configuration may be selected to enhance the charging process or to optimize the management of the battery systems.

The bypass contactors 236 and 238 function as switchable components within the power system 200. They actuate to create or break electrical circuits, allowing for the rerouting of current flow as needed within the vehicle's electrical architecture. Each of the positive bypass contactor 236 and negative bypass contactor 238 may be electromechanical devices that can be engaged or disengaged under the control of the auxiliary high-voltage controller 234 and the vehicle's battery management system. When engaged, these contactors 236 and 238 establish a direct connection between the auxiliary battery pack 208 and the charging infrastructure, allowing for charging currents to bypass the primary battery pack 204.

The inclusion of bypass contactors 236 and 238 in the power system 200 allows for flexibility in how the auxiliary battery pack 208 is charged. For instance, during scenarios where the primary battery pack 204 is at or near full capacity, or when it is more efficient to charge the auxiliary battery pack 208 directly due to its state of charge or temperature, the bypass contactors can be engaged to facilitate this process. Conversely, when it is beneficial to charge the primary battery pack 204 only, the bypass contactors can be disengaged to allow the primary battery pack 204 to be included in the charging circuit.

The control logic of the auxiliary high-voltage controller 234 governing the operation of bypass contactors 236 and 238 may be programmed to consider various parameters, such as the voltage levels of both battery packs, the current capacity of the charging infrastructure, and the desired charging profile.

The auxiliary battery system 206 also includes a low-voltage connector 224 that is electrically coupled to the primary high-voltage controller 222, the extender drive unit header 226, and the rear drive unit header 228. Additionally, the low-voltage connector 224 is interconnected with the low-voltage connector 224 of the primary battery system 202.

The primary high-voltage controller 222 and the low-voltage connector 224 serve as conduits for electrical signals within the auxiliary battery system 206. These connectors facilitate the transfer of electrical power and data between various components of the electric vehicle's powertrain and battery systems.

The primary high-voltage controller 222 is designed to handle high-voltage inputs and outputs, providing a secure and reliable connection for the high-voltage circuits. The low-voltage connector 224, on the other hand, is tailored for circuits operating at lower voltages, supplying power to auxiliary systems and facilitating communication between control modules.

The auxiliary battery system 206 also includes an MC4 solar connector 256, allowing for the integration of solar panels to harness renewable energy and charge the auxiliary battery pack 208. The MC4 solar connector 256 comprises a male and a female connector, each equipped with a locking mechanism to prevent accidental disconnection.

The MC4 solar connector 256 may be connected to the auxiliary battery pack 208 through a dedicated solar charging circuit. This circuit includes a Maximum Power Point Tracking (MPPT) controller, which optimizes the power output from the solar panels by continuously adjusting the operating point to achieve efficiency. The MPPT controller enables the auxiliary battery pack 208 to receive power from the solar panels, regardless of variations in sunlight intensity and temperature.

The solar charging circuit may also include safety features such as overcurrent protection, reverse polarity protection, and surge protection to safeguard the auxiliary battery pack 208 and the vehicle's electrical system from potential damage.

### Thermal System

FIG. 2 also illustrates a cooling system for an electric vehicle range extender in the form of the auxiliary battery system 206, according to some examples. The diagram illustrates components and their interconnections that facilitate the thermal management of the auxiliary battery system 206.

A coolant heat exchanger 240 serves as an interface for thermal energy transfer between the auxiliary battery system 206 and the vehicle's main coolant loop. Coolant ports 242 provide the inlets and outlets for the coolant fluid, allowing it to circulate through the auxiliary battery system 206. These ports are connected to a vehicle coolant loop hose 244 which integrates the cooling system of the auxiliary battery system 206 with the vehicle's existing thermal management infrastructure.

A reservoir 246 acts as a storage tank for the coolant fluid, maintaining a supply to accommodate the system's thermal load demands. It is connected to a pump 248, which propels the coolant through the auxiliary battery system 206. The pump's operation may be calibrated to match the cooling requirements of the auxiliary battery system 206.

In some examples, the coolant heater 250 may be employed to increase the temperature of the coolant fluid, particularly in conditions where the auxiliary battery system 206 requires preheating, for example to achieve efficiency or during cold starts.

In some examples, the coolant heater 250 may be employed to increase the temperature of the coolant fluid, particularly in conditions where the auxiliary battery system 206 requires preheating, for example to achieve efficiency or during cold starts. Additionally, the system can utilize power transfer between the two auxiliary power conversion systems (PCSs) as an additional heating source. By intentionally inducing losses during power transfer between the PCSs, the resulting heat can be used to warm up the auxiliary battery pack 128. This innovative approach provides an efficient method for heating the auxiliary battery 104, especially in cold conditions.

In some examples, the extender coolant loop 252 positions the first power conversion system 230 and the second power conversion system 232 in a parallel thermal configuration. This strategic arrangement allows for an even distribution of coolant flow between the two power conversion systems. Having the PCSs thermally in parallel reduces scenarios where one PCS might receive a hotter inlet temperature than the other, which could lead to thermal imbalances and reduced efficiency. The parallel configuration that enables both PCSs to maintain similar temperature profiles, enhancing the overall reliability and performance of the power conversion process.

The parallel thermal configuration of the PCSs 230 and 232 within the extender coolant loop 252 also simplifies the thermal management design, as it allows for a single, unified coolant flow path that services both PCSs simultaneously. This design choice may reduce the complexity of the coolant routing and can potentially lead to a more compact and cost-effective cooling system architecture.

In some examples, the coolant system may include sensors and control units (not shown in FIG. 2) that monitor the temperature of the coolant fluid and the range extender's components. These sensors provide feedback to a thermal management controller, which adjusts the flow rate and the operation of the coolant heater to maintain the desired thermal conditions.

### Method 300

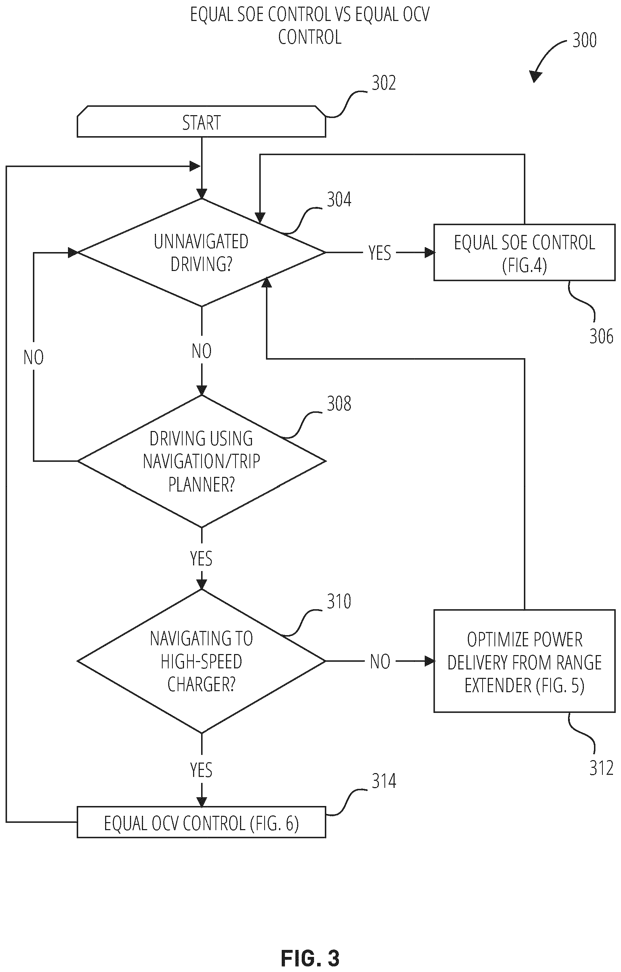

FIG. 3 illustrates a method 300 of power delivery in an electric vehicle (e.g., vehicle 802) having both primary and auxiliary battery packs. Although the example routine depicts a particular sequence of operations, the sequence may be altered without departing from the scope of the present disclosure. For example, some of the operations depicted may be performed in parallel or in a different sequence that does not materially affect the function of the routine. In other examples, different components of an example device or system that implements the routine may perform functions at substantially the same time or in a specific sequence.

The method 300 starts at block 302, setting the initial conditions for vehicle 1102's power management system. At decision block 304, the system evaluates whether or not the vehicle is operating under unnavigated conditions. Unnavigated conditions may include scenarios where a navigation or map system of the vehicle 802 is not active or where a driver assistance system with navigation assistance is not active or employed. This assessment may include determining if the vehicle is engaged in navigation or trip planning and is operating under typical usage patterns. Examples of unnavigated conditions include daily commutes, short trips around town, or any driving scenario where the vehicle is not following a predetermined route to a specific destination, as determinable by systems of vehicle 802. This assessment determines the default strategy for managing the vehicle's power.

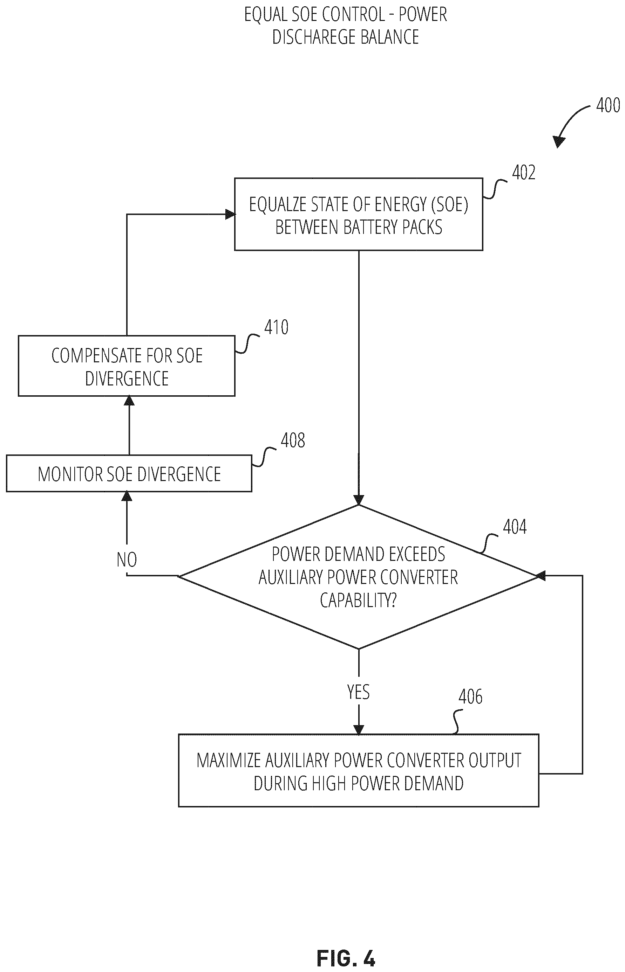

If regular driving is confirmed, the process moves to block 306, where the State of Energy (SOE) across the vehicle's battery systems is equalized. This involves adjusting the energy distribution between the primary battery pack 112 and auxiliary battery pack 128 to provide balanced discharge rates, which may be helpful for maintaining battery health. Further details regarding example implementations of these operations are discussed with reference to FIG. 4). From block 306, the method 300 loops back to decision block 304.

If regular driving (e.g., navigation is engaged) is not confirmed at decision block 304, at decision block 308, the method 300 checks if navigation tools or trip planning applications are active. The engagement of such tools may provide advance information relating to the vehicle's energy requirements and charging options based on expected changes in driving conditions or planned routes. This detection triggers adjustments in power management settings to accommodate anticipated driving demands. Following a negative determination at decision block 308, the method 300 loops back to decision block 304. A positive determination at decision block 308 advances the method 300 to decision block 310,

A positive determination at decision block 308 advances the method 300 to decision block 310, where the system determines whether the vehicle's route includes a stop at a high-speed charger. High-speed chargers, also known as fast chargers, are capable of delivering high power levels to the vehicle's battery system, significantly reducing charging times. Examples of high-speed chargers include Level 3 DC fast chargers, which can deliver power outputs ranging from 50 kW to 500 kW, and Tesla's proprietary Superchargers, such as V3 Superchargers operating at up to 250 kW and V4 Superchargers capable of delivering up to 500 kW or more. These chargers provide rapid energy transfer directly to the vehicle's battery system, bypassing the onboard charger and allowing for efficient and quick replenishment of the battery's state of charge. This may necessitate pre-conditioning of the battery systems for rapid charging. This operation increases thermal management activities and aligns the battery's state of charge to optimize the charging process.

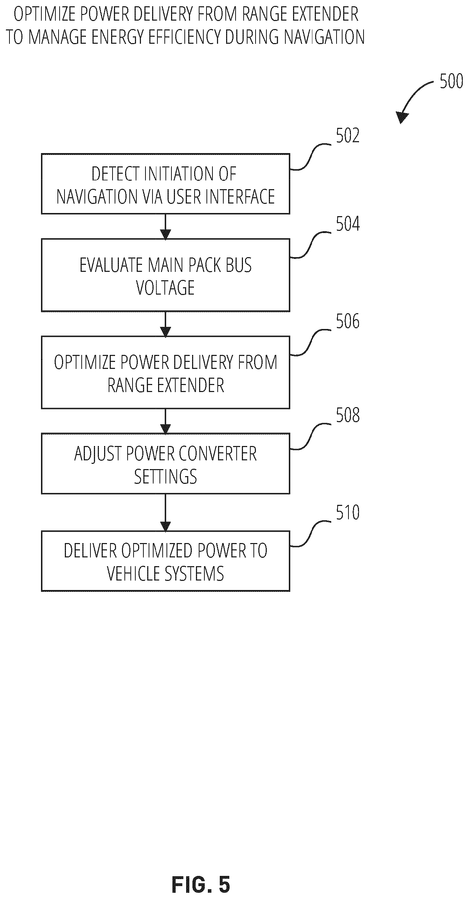

Following a negative determination at decision block 310, the method 300 advances to block 312, where the output from the auxiliary battery pack is optimized. This involves adjusting the power delivery from the range extender to minimize losses in the DC/DC conversion process and to use the stored energy in the range extender's cell array more effectively. Further details regarding these operations are discussed with reference to FIG. 5.

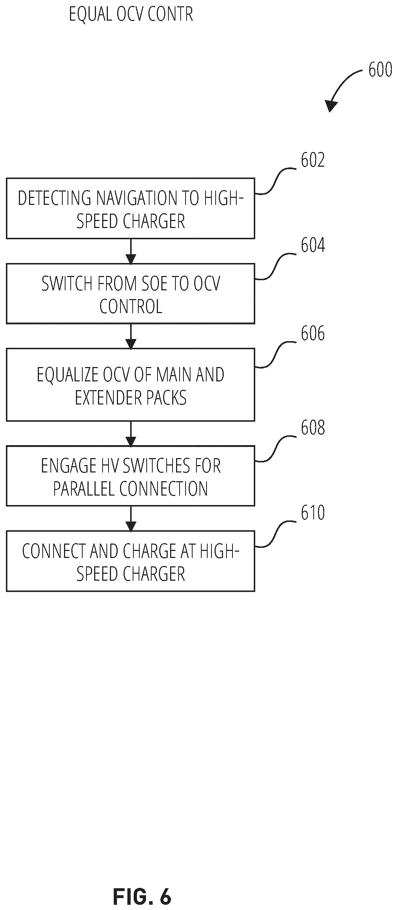

Following a positive determination at decision block 310, at block 314, the method 300 manages Open Circuit Voltage (OCV) differences between the primary and auxiliary battery packs 112 and 128. Aligning the OCV may be helpful when preparing for charging sessions where both battery systems need synchronized voltage levels for efficient and safe charging. Further details are provided with respect to FIG. 6.

### Method 400

FIG. 4 is a flowchart illustrating a method 400 of managing power delivery in an electric vehicle with an auxiliary battery pack (e.g., a range extender), according to some examples, of optimizing energy usage during regular (e.g., unnavigated) driving. In some examples, the method 400 may correspond to the operations performed at block 306 of FIG. 3

Although the example method depicted in FIG. 4 shows a particular sequence of operations, the sequence may be altered without departing from the scope of the present disclosure. For example, some of the operations depicted may be performed in parallel or in a different sequence that does not materially affect the function of the method. In some examples, different components of an example device or system that implements the method may perform functions at substantially the same time or in a specific sequence.

At block 402, a control system seeks to equalize the State of Energy (SOE) between the primary battery pack 112 and the auxiliary battery pack 128. This operation involves the vehicle's control system adjusting the power output from the auxiliary battery pack 128 (e.g., a range extender) to match the total power demand of the vehicle, scaled by the ratio of remaining energy in the auxiliary battery pack 128 to the total remaining energy in both the primary battery pack 112 and the auxiliary battery pack 128. This seeks to provide balanced energy usage.

In specific examples, the vehicle's high-voltage electrical control system, which may include the primary high-voltage controller 110 for the primary battery pack 112 and the auxiliary high-voltage controller 126 for the auxiliary battery pack 128, dynamically adjusts the output from the auxiliary battery pack 128. This adjustment is calculated to match the energy output to the vehicle's current energy requirements, proportionally based on the remaining energy in the auxiliary battery pack 128 compared to the combined energy left in both the primary and auxiliary battery packs. This method helps maintain a balanced state of energy (SOE) across both battery packs, optimizing the vehicle's overall performance and energy efficiency.

The balancing of the State of Energy (SOE) between the primary battery pack 112 and the auxiliary battery pack 128 may involve various control mechanisms. The primary high-voltage controller 110 and the auxiliary high-voltage controller 126 communicate to regulate power transfer over a Controller Area Network (CAN) bus. This communication protocol allows the controllers to exchange signals and commands about vehicle states, requests, and other relevant information. The CAN bus provides a robust and reliable method for real-time communication between the primary and auxiliary battery packs and the control system, enabling efficient coordination of power transfer and management of the vehicle's electrical systems.

For instance, if the auxiliary battery pack 128 has a higher relative SOE, the controllers may reduce its output to match the drain rate of the primary battery pack 112, thereby synchronizing their discharge rates. This synchronization may be used where consistent power delivery is desirable, such as during extended driving or high-demand condition.

At decision block 404, the control system determines if the power demand exceeds the capability of the auxiliary power converter 130. This determination assesses whether the power required during high-demand scenarios, such as rapid acceleration or heavy towing, surpasses what the auxiliary power converter 130 and auxiliary power converter 132 can deliver. If the demand is within these converters' limits, the control loop continues to equalize SOE; if not, the process advances to maximize the DCDC output from the auxiliary power converter 130 and auxiliary power converter 132.

In some examples, the vehicle's control system, which includes components like the auxiliary high-voltage controller 126, checks if the combined capabilities of the auxiliary power converters 130 and 132 are sufficient to meet the current power requirements of the vehicle. These requirements might spike during conditions such as rapid acceleration or when the vehicle is towing heavy loads. If the power demand is within the capacity of these converters, the system maintains the standard procedure of equalizing the State of Energy (SOE) across the battery packs. However, if the demand exceeds what the converters can handle, the system shifts its strategy to maximize the DC-DC output, ensuring that the vehicle continues to operate effectively under high-load conditions.

Following a determination at decision block 404 that the power demand exceeds the capabilities of the auxiliary battery pack 128, at block 406, the control system seeks to maximize the output of the auxiliary power converters 130 and 132 during high power demand. When the power demand exceeds the capacity of the converters, the control system outputs a maximum or near maximum power from the auxiliary power converters 130 and 132. However, in examples where the primary battery pack 112 has a larger capacity than the auxiliary battery pack 128, it will be appreciated that more power will be outputted from the primary battery pack 112, leading to a temporary divergence in the SOE of the two battery packs.

In some examples, maximizing the output of auxiliary power converters 130 and 132 involves control algorithms within the auxiliary high-voltage controller 126. These algorithms calculate the required power output based on real-time vehicle performance data and adjust the converters' operation accordingly. When the demand on the vehicle's power system spikes beyond what the auxiliary converters can typically handle, the control system overrides standard limits, pushing the converters to produce near or at their maximum output capacity. This action, while necessary to maintain vehicle performance, causes a temporary divergence in the SOE between the primary and auxiliary battery packs. The control system monitors this divergence to ensure it remains within safe parameters, preventing potential damage to the battery systems and ensuring continued vehicle reliability.

On the other hand, following a determination at decision block 404 that the power demand does not exceed the capabilities of the auxiliary battery pack 128, at block 408, the control system monitors the SOE divergence between the primary battery pack 112 and the auxiliary battery pack 128. This operation involves continuous monitoring of the energy levels in packs 112 and 128 to determine variances, especially after instances where the DCDC output from the auxiliary battery pack 128 has been maximized due to high power demands.

At block 410, the control system compensates for SOE divergence when the power demand allows. For example, during periods when the power demand is less than the maximum DCDC capability of the auxiliary power converters 130 and 132, the control system increases the power output from the auxiliary battery pack 128 beyond the normal ratio. This 'catch-up' mechanism helps in realigning the SOE levels between the primary battery pack 112 and the auxiliary battery pack 128 to achieve long-term balance and efficiency.

For some examples, the management of SOE divergence includes control strategies implemented by the auxiliary high-voltage controller 126. These strategies are activated when the vehicle's power demand is sufficiently low to not fully engage the capacity of auxiliary power converters 130 and 132. Under these conditions, the control system can safely increase the energy output from the auxiliary battery pack 128 without risking overloading the vehicle's power system. This increase is calculated based on the extent of the SOE divergence and the current capacity of the primary battery pack 112. By boosting the output from the auxiliary battery pack 128, the control system compensates for earlier periods of high demand that may have disproportionately drained the primary battery.

### Method 500

FIG. 5 is a flowchart illustrating a method 500 for power delivery from an auxiliary battery pack in an electric vehicle, according to some examples. In some examples, the method 500 corresponds at least partially to the operations at block 312 of FIG. 3 and are at least partially performed under the control of the auxiliary high-voltage controller 126, which controls the auxiliary power converter 130 and auxiliary power converter 132 of the auxiliary battery 104.

Although the example method depicted in FIG. 5 shows a particular sequence of operations, the sequence may be altered without departing from the scope of the present disclosure. For example, some of the operations depicted may be performed in parallel or in a different sequence that does not materially affect the function of the method. In some examples, different components of an example device or system that implements the method may perform functions at substantially the same time or in a specific sequence.

At block 502, the method 500 begins when a user inputs a destination into the vehicle's navigation system through the user interface (UI). This action triggers the Trip Planner to calculate the route and assess the current energy requirements based on the vehicle's location and intended destination.

At block 504, a control system evaluates the main pack bus voltage to determine its current level. This voltage level assessment is performed as it influences the efficiency of the auxiliary power converters (e.g., parallel auxiliary power converter 130 and auxiliary power converter 132 each of which includes a DC/DC converter), which determine power drawn from the auxiliary battery pack 128.

At block 506, based on the voltage assessment from block 504, the system's control unit optimizes the power delivery from the range extender. This optimization process may involve several technical operations to provide efficient energy transfer and reduce losses in the DC/DC conversion process.

First, the control unit evaluates the bus voltage of both the primary battery pack 112 and the auxiliary battery pack 128, which are parameters influencing the efficiency of the DC/DC converters. The DC/DC conversion efficiency depends on the voltage levels on both sides of the conversion process. The bus voltage of the primary battery pack 112 is the voltage level at the DC link of the primary battery pack, which can vary depending on the state of charge (SOC) and the current load on the vehicle. Higher bus voltages generally result in more efficient DC/DC conversion, as the converters can operate closer to their optimal efficiency points.

If the bus voltage of the primary battery pack 112 is high, the system prefers to draw more power from the auxiliary high-voltage controller 126. This strategy is employed to reduce losses in the DC/DC conversion process and to use the stored energy in the auxiliary high-voltage controller 126 more effectively. The auxiliary battery 104, which includes an auxiliary battery pack and associated power conversion systems (PCSs), supplements the primary battery pack by providing additional energy during high-demand scenarios.

The control unit (e.g., the auxiliary high-voltage controller 126 and/or the primary power converter 116) dynamically adjusts the operation of the DC/DC converters within the auxiliary battery 104 based on the real-time voltage assessment. The DC/DC converters, which include components such as insulated-gate bipolar transistors (IGBTs) or metal-oxide-semiconductor field-effect transistors (MOSFETs), are capable of both stepping up and stepping down voltage levels. This allows the auxiliary battery 104 to effectively interface with the main pack bus voltage, regardless of its current level.

When the bus voltage of the primary battery pack 112 is high, the control unit increases the power output from the auxiliary battery 104 (e.g., range extender) by adjusting the pulse-width modulation (PWM) signals to the DC/DC converters in the auxiliary power converter 130 and auxiliary power converter 132. This adjustment assists the converters in operating at increased efficiency points, reducing conversion losses and maximizing the energy transfer from the range extender to the primary battery pack.

Additionally, the control unit monitors the state of energy (SOE) of both the primary and auxiliary battery packs. The SOE is a measure of the remaining energy in the battery packs, and it is used to balance the power delivery between the two systems. By dynamically adjusting the power output from the auxiliary battery 104 based on the main pack bus voltage and the SOE, the control unit seeks to increase the efficiency of energy stored in the auxiliary battery pack 128, potentially extending the vehicle's driving range and improving overall efficiency.

In summary, at block 506, the system's control unit may seek to optimize the power delivery from the auxiliary battery pack 128 by:
- Evaluating the main pack bus voltage to determine the current level.
- Preferentially drawing more power from the auxiliary battery pack 128 when the bus voltage of the primary battery pack 112 is high.
- Dynamically adjusting the operation of the DC/DC converters (e.g., of the primary power converters 116 and auxiliary power converters 130) to minimize conversion losses and maximize energy transfer.
- Monitoring the state of energy (SOE) of both the primary and auxiliary battery packs to balance power delivery.

At block 508, adjustments are made to the settings of the DC/DC converters of the auxiliary power converter 130 and auxiliary power converter 132 to align with the optimal discharge strategy identified. These adjustments are crucial for ensuring that the converters 130 and 132 operate at increased efficiency, taking into account the current bus voltage of the main pack.

The discharge strategy may be determined based on several factors, including the bus voltage of the primary battery pack 112, the state of charge (SOC) of both the primary and auxiliary battery packs, and the real-time power demands of the vehicle 802. The goal is to reduce or minimize energy losses in the DC/DC conversion process and to maximize the effective use of the stored energy in the auxiliary battery pack.

To achieve this, and as noted above, the control unit dynamically adjusts the pulse-width modulation (PWM) signals sent to the DC/DC converters of the auxiliary power converter 130 and auxiliary power converter 132. PWM is a technique used to regulate the output voltage and current of the converters by varying the duty cycle of the switching transistors, such as insulated-gate bipolar transistors (IGBTs) or metal-oxide-semiconductor field-effect transistors (MOSFETs). By fine-tuning the PWM signals, the control unit can optimize the operating points of the converters to achieve higher efficiency.

In some examples, the adjustments to the DC/DC converters may include the following operations:
- Voltage Matching The control unit ensures that the output voltage of the auxiliary power converters 130 and 132 matches the main pack bus voltage. This is achieved by adjusting the PWM signals to regulate the voltage levels, allowing for energy transfer between the auxiliary battery pack and the primary battery pack.
- Current Regulation The control unit monitors the current flow through the DC/DC converters and adjusts the PWM signals to maintain the desired current levels. This helps prevent the converters from overloading and ensures that the power delivery is within safe operational limits.
- Thermal Management: The control unit takes into account the thermal conditions of the DC/DC converters and the auxiliary battery pack. By adjusting the PWM signals, the control unit can manage the heat generation within the converters, preventing overheating and ensuring reliable operation.
- Efficiency Optimization: The control unit continuously monitors the efficiency of the DC/DC converters and makes real-time adjustments to the PWM signals to operate the converters at or near optimal efficiency points. This involves fine-tuning the duty cycle of the switching transistors to minimize energy losses and maximize the power output.

These adjustments may be made in real-time, based on feedback from various sensors integrated within the power system 100. Voltage sensors provide data on the main pack bus voltage and the output voltage of the DC/DC converters, while current sensors monitor the current flow through the converters. Additionally, temperature sensors provide information on the thermal conditions of the converters and the auxiliary battery pack.

The control unit (e.g., primary power converter 116 and or auxiliary power converter 130 and auxiliary power converter 132) may use this real-time data to dynamically adjust the settings of the DC/DC converters, ensuring that they operate at increased efficiency and align with the discharge strategy. This may not only improve the overall energy efficiency of the vehicle but also extend the lifespan of the battery packs by preventing stress and thermal degradation.

At block 112, the power from the auxiliary battery 104 is delivered to the vehicle's systems. This power supports the vehicle's operational needs while traveling to the destination set in the Trip Planner, for example, ensuring that energy usage is efficient and effective throughout the journey.

### Method 600

FIG. 6 is a flowchart illustrating a method 600 of transitioning control strategies in an electric vehicle's charging system, according to some examples, of managing battery voltage during navigation to a charging station. In some examples, the method 600 may at least partially correspond to operations at decision block 310 and block 314 of FIG. 3.

Although the example method depicted in FIG. 6 shows a particular sequence of operations, the sequence may be altered without departing from the scope of the present disclosure. For example, some of the operations depicted may be performed in parallel or in a different sequence that does not materially affect the function of the method. In some examples, different components of an example device or system that implements the method may perform functions at substantially the same time or in a specific sequence.

At block 602, the vehicle's navigation system detects that the destination is set to a high-speed charger (e.g., a 400V supercharger). This detection triggers a change in the battery management strategy to prepare for optimal charging conditions upon arrival.

In some examples, the vehicle's navigation system detects that the destination is set to a high-speed charger when the user inputs the destination through the navigation software user interface. The system may have a database of known high-speed charging locations and match the input destination against this database. This allows for the identification of high-speed charging destinations based on user input.

In some examples, the vehicle may receive real-time data from charging network providers about the locations and types of chargers available. When a destination is set, the system cross-references this data to determine that the destination includes a high-speed charger. This approach seeks to provide the vehicle has the most up-to-date information about charging infrastructure.

In some examples, as the vehicle approaches the destination, it may communicate with nearby charging infrastructure using vehicle-to-infrastructure (V2I) technology. This communication may provide information about the type of charger available, allowing the vehicle to detect high-speed chargers. V2I technology enables real-time confirmation of charging capabilities as the vehicle nears its destination.

In some examples, the navigation system may use machine learning algorithms to predict whether a destination is likely to have a high-speed charger based on historical data, location type, and other contextual information. This prediction could trigger the change in battery management strategy, allowing the vehicle to prepare for potential high-speed charging even before confirmation.

In some examples, the navigation system may analyze the user's charging history and preferences stored in their profile. If the user frequently uses high-speed chargers at certain locations or types of destinations, the navigation system may predict that a similar destination is likely to have a high-speed charger. This personalized approach leverages user behavior to anticipate charging needs.

In some examples, the vehicle's navigation system may integrate with popular third-party navigation applications that have databases of charging stations. When a destination is set through these apps, they can provide information about the type of charger available. This integration expands the vehicle's access to charging information beyond its built-in database.

In some examples, the vehicle may maintain an onboard database of charging stations that is regularly updated over-the-air. When a destination is set, the system checks this database to determine if a high-speed charger is available at or near the destination. This approach ensures the vehicle has access to charging information even without network connectivity.

In some examples, the navigation system may continuously analyze the route to the destination and identify high-speed charging options along the way. If a high-speed charger is detected within a certain range of the final destination, the system may trigger the change in battery management strategy. This approach allows for the optimization of charging strategies based on the entire journey, not just the final destination.

The vehicle's navigation system may incorporate advanced autonomous driving features that assist in detecting and navigating to high-speed chargers. The system may utilize machine learning algorithms to predict optimal charging locations based on the vehicle's current state of charge, driving conditions, and user preferences. This predictive capability allows the vehicle to proactively suggest high-speed charging stops along the route, even before the user explicitly sets a charging destination.

At block 604, the battery management system (BMS) switches its control strategy from State of Energy (SOE) balancing (see FIG. 4) to Open Circuit Voltage (OCV) matching. This switch is to align the voltage levels of the primary battery pack 112 and the auxiliary battery pack 128 in anticipation of parallel charging of these packs.

This shift involves reconfiguring the control algorithms within the high-voltage control systems (e.g., the primary high-voltage controller 110 and the auxiliary high-voltage controller 126) to prioritize voltage level alignment over energy distribution. The primary high-voltage controller 110 and auxiliary high-voltage controller 126, in some examples, adjust operational focus to monitor and manage the voltage disparities between the primary battery pack 204 and the auxiliary battery pack 208. This adjustment is to prepare both battery systems to share a common charging connection without causing voltage conflicts that could potentially damage the battery cells.

At block 606, the primary high-voltage controller 110 and the auxiliary high-voltage controller 126 actively manage the charging and discharging of the primary battery pack 112 and the auxiliary battery pack 128 to equalize their respective OCVs. This may include control of the power electronics to adjust the voltage levels in preparation for parallel connection. The power conversion systems (e.g., primary power converter 116, auxiliary power converter 130, and auxiliary power converter 132), which include components such as DC/DC converters and other voltage regulation modules, are used to tune the voltage outputs of each of the primary battery pack 112 and auxiliary battery pack 128. These adjustments are made based on feedback from voltage sensors integrated within each battery system, ensuring that the voltage levels are brought within a threshold that is safe for parallel connection.

At block 608, once the OCVs of the primary battery pack 112 and the auxiliary battery pack 128 are aligned, high-voltage (HV) switches, or contactors (e.g., auxiliary bypass contactors 134), are engaged to connect the primary battery pack 112 and auxiliary battery pack 128 in parallel. This connection allows both battery packs to be charged simultaneously by the high-voltage DC charger 118, optimizing the charging process and reducing the time required to reach a full charge. The engagement of these contactors is managed by the auxiliary high-voltage controller 126 126, which ensures that the connection is made at an appropriate time when the voltage levels are sufficiently synchronized to prevent electrical arcing or undue stress on the battery cells.

At block 610, upon arrival at the high-speed high-voltage DC charger 118, the vehicle connects to the charging station via the fast charge connector 120 and charge port 122, and both battery packs 112 and 126 receive power through the parallel configuration. The charging process is monitored by a BMS to ensure safety and efficiency, adjusting parameters as needed based on real-time data from the vehicle's sensors and the supercharger's output. This includes monitoring the current flow, voltage levels, and temperature of each battery pack. Adjustments to the charging rate or power distribution may be made in real-time to optimize the charging process, prevent overheating, and ensure that both battery packs are charged evenly and safely.

This sequence seeks to provide vehicle arrival at a high-speed charger with its battery packs properly aligned in terms of voltage, maximizing the efficiency of the charging session and reducing wear on the battery cells. In some examples, alternative configurations or additional steps may be included to accommodate different types of superchargers or vehicle models.

### Method 700

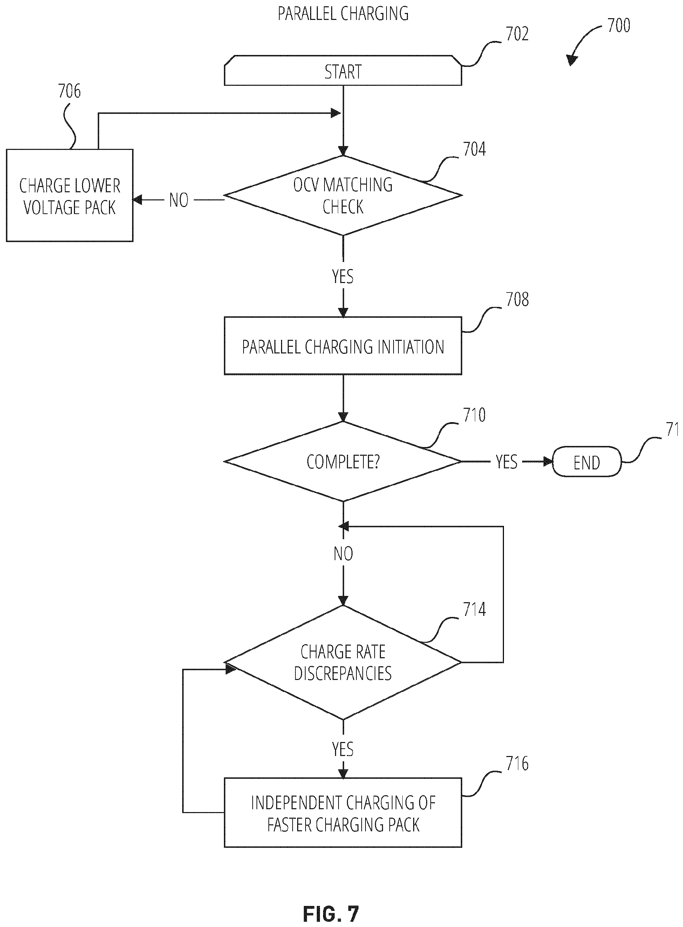

FIG. 7 is a flowchart illustrating a method 700 of managing the charging of dual batteries (e.g., a primary battery pack 112 and an auxiliary battery pack 128), according to some examples.

Although the example method 700 depicted in FIG. 7 shows a particular sequence of operations, the sequence may be altered without departing from the scope of the present disclosure. For example, some of the operations depicted may be performed in parallel or in a different sequence that does not materially affect the function of the method. In some examples, different components of an example device or system that implements the method may perform functions at substantially the same time or in a specific sequence.

At block 702, the method 700 begins with the initiation of the charging process, where the vehicle's battery management system (BMS), including the primary high-voltage controller 110 and the auxiliary high-voltage controller 126, starts to evaluate charging requirements based on user input or automatic detection of a charging need.

At decision block 704, the primary high-voltage controller 110 and the auxiliary high-voltage controller 126 check if the Open Circuit Voltage (OCV) of the primary battery pack 112 and auxiliary battery pack 128 are matched. This operation is performed by measuring the voltage levels of each battery pack and comparing them to determine if they are sufficiently close to allow for parallel charging. Specifically, the primary high-voltage controller 110 measures the OCV of the primary battery pack 112, and the auxiliary high-voltage controller 126 measures the OCV of the auxiliary battery pack 128 and reports this to the primary high-voltage controller 110. The primary high-voltage controller 110 then performs a matching determination.

In addition to OCV matching, in some examples, several other criteria may be considered or factored in before parallel charging can be initiated:
- In-rush Current Safety: The voltage difference between the two battery packs may be required to be small enough to ensure that when the contactors of the auxiliary battery 104 are closed, the resulting in-rush currents are low enough to prevent damage to any components, especially the switches themselves.
- Thermal Conditioning: Both battery packs may be required to be properly thermally preconditioned to ensure efficient parallel charging. If there is a significant temperature difference between the packs (e.g., if the primary battery pack 112 is hot and the auxiliary battery pack 128 is cold), parallel charging will not be initiated even if the OCVs are equal. This is because a cold auxiliary battery pack 128 could significantly slow down the charging process of the primary battery pack 112, making it more efficient to charge the main pack independently.
- Relative Impedances: The system may evaluate the relative impedances of both battery packs to ensure they will charge efficiently in parallel. If the impedances are not well-matched, it may be more efficient to charge the packs separately.
- Component Health: The system may also check the health and status of various components involved in the charging process, such as contactors, cooling systems, and power conversion systems, to ensure safe and efficient parallel charging.
- Charging Infrastructure Compatibility: The charging station's capabilities and compatibility with parallel charging may also be assessed to ensure the process can be carried out safely and efficiently.

In some example, based on a subset or all these criteria being met - e.g., OCV matching, proper thermal conditioning, suitable relative impedances, component health, and charging infrastructure compatibility - the system proceed with parallel charging of the primary and auxiliary battery packs.

If the OCVs are not matched ("no" at decision block 704), the method 700 proceeds to block 706, where the BMS directs the charging system to prioritize the battery pack with the lower voltage.

Specifically, if the auxiliary battery pack 128 has a lower OCV than the primary battery pack 112, the primary high-voltage controller 110 and the auxiliary high-voltage controller 126 coordinate to close the main vehicle fast charge contractor 124, open the primary pack contractors 144 to isolate the primary battery pack 112, and close the auxiliary bypass contactors 134 to only charge of the auxiliary battery pack 128 directly from the high-voltage DC charger 118.

On the other hand, if the primary battery pack 112 has a lower OCV than the auxiliary battery pack 128, the primary high-voltage controller 110 and the auxiliary high-voltage controller 126 co-ordinate to close the main vehicle fast charge contractors 124 and open the auxiliary bypass contactors 134, so that only the primary battery pack 112 is charged.

If the OCVs of primary battery pack 112 and auxiliary battery pack 128 are matched ("yes" at decision block 704), the method 700 advances to block 708, where the primary high-voltage controller 110 and auxiliary high-voltage controller 126 engages controls to connect the battery packs in parallel. This connection allows the charging current to be shared between both packs, optimizing the charging speed and efficiency.

Specifically, the auxiliary high-voltage controller 126 monitors the OCV of the auxiliary battery pack 128, and the primary high-voltage controller 110 monitors the OCV of the primary battery pack 112, and these voltages are communicated between each the controllers 110 and 126. If the auxiliary battery pack 128 is charging and the OCV of the auxiliary battery pack 128 matches the OCV of the primary battery pack 112, the primary high-voltage controller 110 closes the main vehicle fast charge contractor 124. On the other hand, if the primary battery pack 112 is charging and the OCV of the auxiliary battery pack 128 matches the OCV of the auxiliary battery pack 128, the auxiliary high-voltage controller 126 closes the auxiliary bypass contactor 134. Thus, the primary battery pack 112 and the auxiliary battery pack 128 are now connected and can charge in parallel.

In the process of managing the charging of the primary battery pack 112 and the auxiliary battery pack 128, a process known as Constant Voltage (CV) holding may be implemented. In some examples, this process involves maintaining a target voltage that matches the higher voltage of the two battery packs 112 and 128. The CV hold target may be set to equal the Open Circuit Voltage (OCV) of the battery pack with the lower voltage at that moment. This approach seeks to ensure that the voltage levels between the two battery packs are closely aligned before a connection is made.

During the CV holding phase, the charge current is carefully tapered to remain below a make current capability of the contactors (e.g., main vehicle fast charge contractors 124 and auxiliary bypass contactors 134). This current may be held at 50 amps or less conservatively between 150 or 300 amps.

Once the current reaches a level deemed safe- e.g., within an acceptable range for the inrush capability of the contactor-the contactors (e.g., auxiliary bypass contactors 134) are engaged. This action allows the two battery packs to connect and begin charging in parallel. The engagement of the contactors, either the main vehicle fast charge contractor 124 or the auxiliary bypass contactor 134, depends on which battery pack is actively charging and achieving voltage parity with the other.

This process may be monitored and controlled by the Battery Management System (BMS), which operatively seeks to ensure that the charging does not exceed the capacities and safety parameters set for the battery packs.

Some examples may handle a voltage mismatch of about one to three volts between the two battery packs. This capability allows the contactors to close without the risk of welding due to excessive current flow.

At decision block 710, the primary high-voltage controller 110 and the auxiliary high-voltage controller 126 operate to continuously monitor the charging status of the respective battery packs to determine if both battery packs have reached full charge capacity.

If the charging process is complete ("yes" at decision block 710), the method 700 concludes at block 712, the charging system disengages, and the vehicle is ready for use with both battery packs fully charged.

If the charging is not complete ("no" at decision block 710), the method 700 moves to decision block 714, where the BMS evaluates whether the charging rate of one pack is significantly lower than expected, which could indicate issues such as cell degradation or imbalances affecting overall charging efficiency.

If discrepancies are detected ("yes" at decision block 714), the method 700 proceeds to block 716, where the BMS temporarily isolates the slower charging pack and continues to charge the faster charging pack independently to maximize the charging rate and reduce time spent at the charging station.

In some examples, the Battery Management System (BMS) assesses the charging performance of both the primary battery pack 112 and the auxiliary battery pack 128. If one pack is charging significantly slower than expected, which could be due to factors such as higher internal resistance or temperature anomalies, the BMS takes corrective action. This involves opening the contactors, such as the main vehicle fast charge contractor 124 or the auxiliary bypass contactor 134, associated with the slower charging pack. This isolation prevents the slower pack from limiting the overall charging speed.

Simultaneously, the BMS may adjust the charging protocol for the faster charging pack by potentially increasing the current supply within safe operational limits to expedite the charging process.

The BMS continuously monitors the isolated pack to determine when it can be reintegrated into the charging process without compromising the charging efficiency. This dynamic management of the charging process ensures that both battery packs reach desired charge levels in an efficient manner possible, readying the vehicle for continued operation with minimal delay.

### Vehicle 802

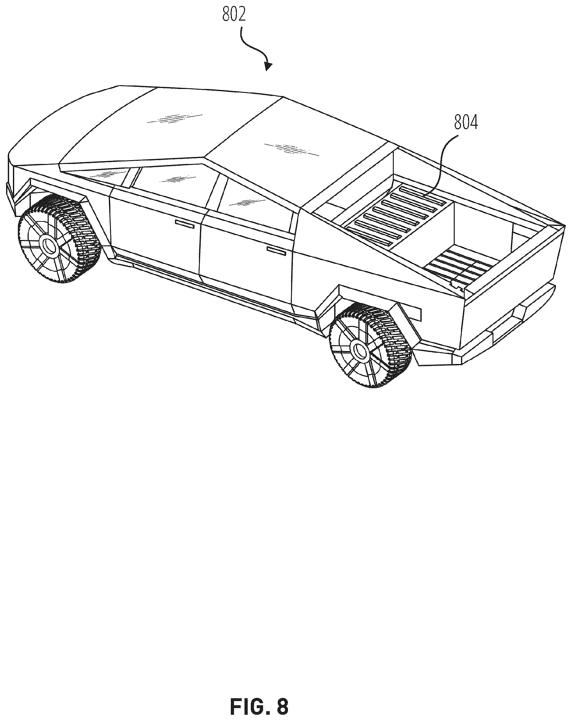

FIG. 8 illustrates a perspective view of a vehicle 802, depicted as a truck, which includes an auxiliary battery pack 804, according to some examples. This auxiliary battery pack 804 is mounted in the bed of the truck, optimizing space utilization and accessibility. The auxiliary battery pack 804 may be connected to the vehicle's high-voltage battery (HVB) DC inlet through an electrical interface that includes various types of connectors to ensure secure and efficient power transfer.

The auxiliary battery pack 804 in FIG. 8 is integrated into the truck's design with a focus on maintaining the functionality of the truck bed. The electrical interface that connects the auxiliary battery pack 804 to the truck's power system connects the High-Voltage Connectors (HVC) 106 and 108, which are designed to handle the high power requirements of the auxiliary battery pack 804. Additionally, low-voltage connectors are also part of this interface, ensuring that lower power needs, such as those for vehicle controls and auxiliary systems, are supported. These connectors are housed within a designated area in the truck bed, making them accessible for maintenance or inspection.

### Trailer 904

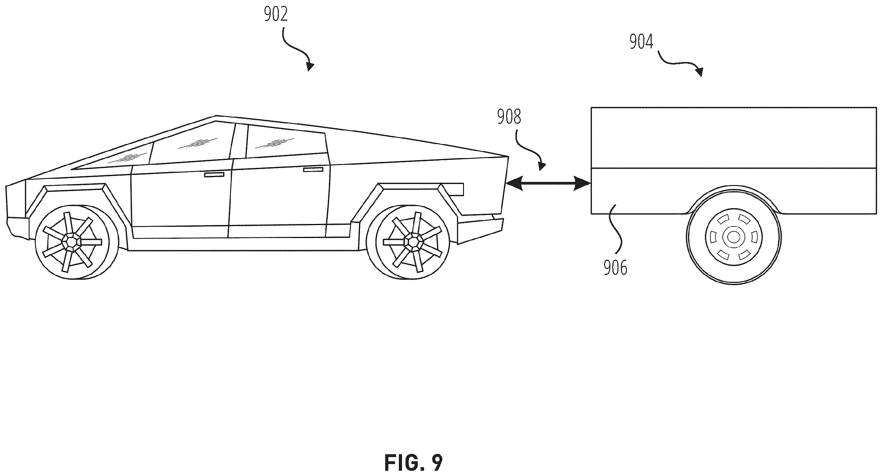

FIG. 9 depicts a side view of a vehicle 902 towing a trailer 904, according to some examples, where an auxiliary battery pack 906 is installed within the trailer 904. The auxiliary battery pack 906 is positioned low in the trailer 904 to lower the center of gravity, enhancing vehicle stability and handling.

An electrical connection and interface 908 connects a primary battery pack in vehicle 902 with the auxiliary battery pack 906. This enables the transfer of power between the vehicle and the trailer.

The electrical connection and interface 908 may incorporate features such as automatic connection recognition, which facilitates the establishment of an electrical link when the trailer is attached. It also includes safety features that prevent electrical arcing and automatically disconnect the power if the trailer detaches or in the event of an accident.

### High-voltage controller 1002

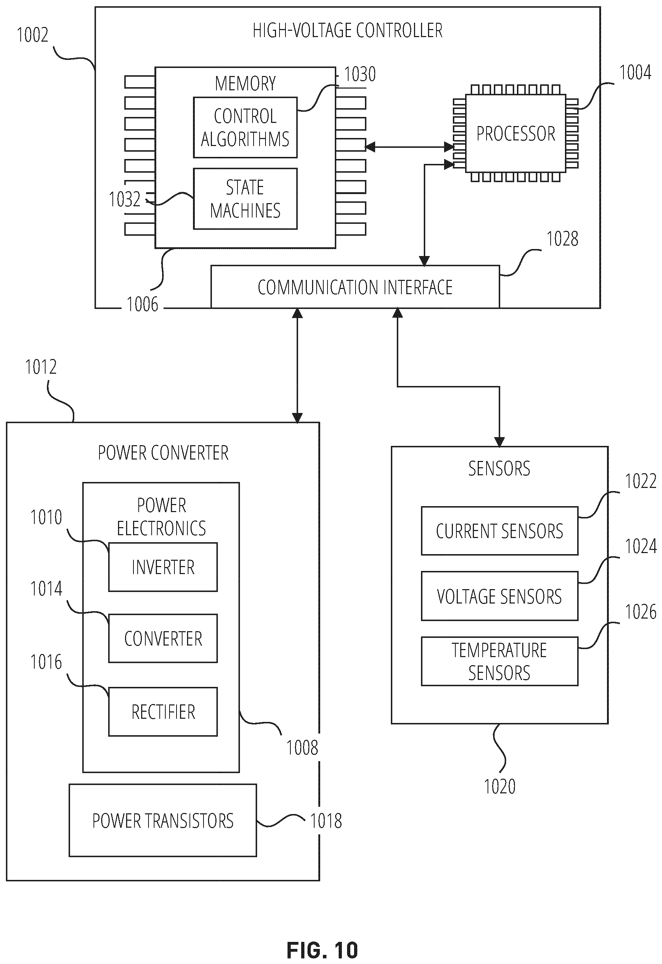

FIG. 10 shows a high-voltage controller 1002 integrated with a power converter 1012 and a set of sensors 1020, according to some examples, for managing power delivery and monitoring in an electric vehicle. The high-voltage controller 1002 is an example of any one of the controllers described herein, such as the primary high-voltage controller 110 or the auxiliary high-voltage controller 126. The power converter 1012 is an example of any one of the power converters discussed herein, including the primary power converter 116, the auxiliary power converter 130 or the auxiliary power converter 132.

The high-voltage controller 1002 includes a processor 1004, a memory 1030, and a communication interface 1028. The processor 1004 executes control algorithms 1030 and state machines 1032 stored in the memory 1030. These control algorithms 1030 and state machines 1032 are responsible for managing the power flow and operational states of the power system 100. The communication interface 1028 facilitates data exchange between the high-voltage controller 1002 and other components of the system, ensuring coordinated operation.

The power converter 1012 comprises power electronics 1008 including an inverter 1010, a converter 1014, a rectifier 1016, and power transistors 1018. The power electronics 1008 manage the conversion of electrical energy between different forms and voltage levels. The inverter 1010 converts DC power to AC power, the converter 1014 adjusts voltage levels, and the rectifier 1016 converts AC power to DC power. The power transistors 1018 are used for switching and controlling the flow of electrical energy within the power converter 1012.

Expanding on the technical details, the inverter 1010 typically employs pulse-width modulation (PWM) techniques to efficiently convert DC power from the battery into AC power suitable for the electric motors. This involves the use of an H-bridge circuit configuration that allows voltage to be applied across the motor in either direction, enabling precise control over motor speed and torque.

The converter 1014, as an example of a DC-to-DC converter, may operate as both a buck or boost converter depending on the required voltage adjustment and uses inductors, capacitors, and power transistors 1018 to either step down or step up the voltage. For instance, a buck converter reduces the voltage from a higher level to a lower level by turning the power transistor on and off at high frequency, storing energy in the inductor during the 'on' phase, and transferring this energy to the output during the 'off' phase.

The rectifier 1016, for example, a diode bridge rectifier, converts incoming AC power from the grid or a generator into DC power that can be stored in the vehicle's battery system. This process involves the transformation of alternating current, which flows in two directions, into direct current, which flows in only one direction.

Power transistors 1018, such as Insulated Gate Bipolar Transistors (IGBTs) or Metal-Oxide-Semiconductor Field-Effect Transistors (MOSFETs), are used to manage the rapid switching required in these converters and inverters. These components are chosen for their efficiency and ability to handle high currents and fast switching speeds. For example, in an inverter, the switching speed of the IGBTs influences the frequency and quality of the output AC power, which is vital for the smooth operation of the electric motors.

The sensors 1020, which encompass current sensors 1022, voltage sensors 1024, and temperature sensors 1026, monitor the operational state of the auxiliary battery 104 within the electric vehicle's power system 100. These sensors may deliver essential real-time data on electrical and thermal conditions.

Current sensors 1022 may be located along the conductive pathways of the auxiliary battery 104, including connections to the power conversion systems and any interconnecting busbars. They measure the flow of electrical current entering and exiting the auxiliary battery 104. This measurement helps in managing load distribution and detecting any abnormalities such as short circuits or unexpected current spikes.

Voltage sensors 1024 are connected across the terminals of the auxiliary battery 104 and at various points within the battery management system. They monitor the voltage levels of the auxiliary battery 104 to ensure that the auxiliary battery pack 128 operates within its designated voltage range. Monitoring voltage may be used for maintaining battery health, optimizing charge cycles, and preventing conditions that could lead to over-voltage or undervoltage scenarios.

Temperature sensors 1026 are placed in contact with components of the auxiliary battery 104, such as the battery cells, modules, and any associated power electronics prone to heating, such as DC/DC converters. These sensors provide data on the temperature of the battery cells and other components, which data may be used for preventing overheating that can degrade battery performance and lifespan. Data from the temperature sensors 1026 may also be used to trigger thermal management actions, such as activating cooling systems or adjusting the battery's charge and discharge rates to maintain safe operational temperatures.

The data collected by these sensors 1020 is communicated to the high-voltage controller 1002 via the communication interface 1028. This allows for the integration of sensor data into the vehicle's central management system, where it can be analyzed and used to make informed decisions. The high-voltage controller 1002 (e.g., the control algorithms 1030 and state machines 1032) uses the information from the sensors to make dynamic adjustments to the operation of the auxiliary battery 104. These adjustments seek to optimize the battery's performance, extend its service life, and ensure its operation within safe parameters.

### Vehicle 1102 Architecture

FIG. 11 is a system diagram illustrating an architecture of an electric vehicle (EV) 1102, according to some examples. This diagram shows systems and sub-systems that collectively enable the functionality and operational efficiency of the electric vehicle 10.

The vehicle 1102 includes a number of higher-level systems that are interconnected, including a battery system 1106, a propulsion system 1104, structural and mechanical systems 1108, a charging system 1110, power electronics 1112, control systems 1114, driver interface and infotainment 1116, safety systems 1118, and auxiliary systems 1120.

The propulsion system 1104 includes one or more electric motors 13, which may include traction motors for propulsion and motors for regenerative braking systems, converting electrical energy into mechanical energy. Power inverters 1122, facilitate the conversion of DC power from the battery to AC power required by the electric motors 1124. The propulsion system also includes a transmission 1126, which may consist of a single-speed transmission or gearbox, channeling mechanical power to the vehicle's wheels.

The battery system 1106 is composed of several battery modules 1128, each housing multiple battery cells 1130. These battery cells 1130 may be based on various chemistries, including lithium-ion, lithium-polymer, or solid-state materials, each offering distinct advantages in terms of energy density, recharge cycles, and safety profiles.

A battery management system (BMS) 1132 continuously monitors various parameters, such as voltage, current, and temperature of each of the battery cells 1130 and battery modules 1128, to prevent conditions that could lead to overcharging, deep discharging, or thermal runaway. The battery management system (BMS) 1132 also manages the state of charge (SoC) and state of health (SoH) of the battery, ensuring that the energy is distributed during discharge and that the charging process is optimized for longevity and safety. Each battery management system (BMS) 1132 employs algorithms to balance the charge across the cells and modules, correcting imbalances that can reduce the battery's overall capacity and lifespan.

Integrated with the battery system 1106 is a thermal management system 1134, which operatively maintains the battery cells 1130 within specified temperature ranges. The thermal management system 1134 employs temperature sensors to monitor the heat generated by the battery cells 1130 during operation. Based on the data collected, it activates cooling and heating mechanisms to regulate the battery's temperature. Cooling methods can include air cooling, where ambient air is circulated around the battery modules, or liquid cooling, where a coolant is circulated through channels in or around the battery modules to absorb and dissipate heat. In colder environments, the thermal management system 1134 may employ heating elements or use waste heat from the vehicle's systems to warm the battery cells, ensuring they operate efficiently even in low temperatures.

The charging system 1110 operatively replenishes the stored energy within the battery system 1106 of the electric vehicle 1102. It supports various charging methodologies to ensure flexibility and convenience in energy restoration. The charging system 1110 may encompass systems for both standard (Level 1 and Level 2) and fast charging (DC fast charging), facilitating a range of charging speeds to suit different user needs and infrastructure capabilities.

For standard charging, the charging system 1110 includes an onboard charger for AC/DC conversion. This onboard charger converts the alternating current (AC) from the electrical grid or home outlets into direct current (DC) that can be stored in the vehicle's battery system 1106. The onboard charger may, for example support Level 1 and Level 2 charging, with Level 1 charging using standard household outlets (1108-120V) and Level 2 charging requiring a higher voltage source (208-240V), such as those found in dedicated charging stations or installed in residential garages.

For fast charging, the charging system 1110 may incorporate a DC fast charging system, designed for rapid energy transfer directly to the vehicle's battery system 1106, bypassing the onboard charger. The system may support the North American Charging Standard (NACS) charging interface and be capable of charging at up to 500kW at 800V. For the 400V auxiliary battery 104 configuration, the system may support charging rates of 325-350kW. While some examples may use a NACS interface, in some examples, the charge port 122 may use other fast charging standards such as Combined Charging System (CCS) or CHAdeMO.6.

Additionally, the electric vehicle 1102 may be equipped with an auxiliary battery, such as a 12V lead-acid or lithium-ion battery may be tasked with powering the vehicle's low-voltage systems, including lighting, infotainment, electronic control units, and other ancillary components, ensuring their operation even when the main battery system is off or during the initial stages of charging when the main system's voltage might be too low for these tasks. This separation of power sources enhances the vehicle's electrical system reliability and seeks to provide the availability of essential functions.

Structural and mechanical systems 1108, including a chassis and body 1136 and suspension system 1138, provide the physical framework and support for the vehicle 1102. The chassis and body 1136 constitute the vehicle's primary structure, while the suspension system 1138, which may include springs, shock absorbers (or dampers), and control arms, to provide a smooth and stable ride by mitigating road shocks and vibrations.

Power electronics 1112, including a power distribution unit (PDU) 1140 and a voltage conversion system 1142, are responsible for the management and conversion of electrical power within the vehicle. The power distribution unit (PDU) 1140, equipped with fuses and relays, distributes power to various vehicle systems, while voltage conversion devices of the voltage conversion system 1142, such as DC/DC and AC/DC converters, adjust the voltage levels to meet the specific requirements of different components.

Control systems 1114 facilitate the driver's command over the vehicle, with a steering system 1144 and a braking system 1146 as examples. The steering system 1144, including a power steering motor, allows for precise directional control, whereas the braking system 1146, which may feature disc brakes and an anti-lock braking system (ABS), enables deceleration and stopping.

The control systems 1114 further include a navigation system 1150 that is responsible for route planning, processing user-input destinations, and identifying charging stations along the route. It interfaces with a driver interface and infotainment 1116 for user interactions and the battery management system (BMS) 1132 to optimize routes based on the vehicle's energy state and charging requirements.

The driver interface and infotainment 1116 supports the driving experience by providing vehicle information and entertainment options through digital displays and multimedia systems. Connectivity features, such as Bluetooth and USB, further augment functionality.

Safety systems 1118, designed to protect the vehicle's occupants, may include airbag systems and advanced driver-assistance system (ADAS) 1152 (ADAS), for example. The advanced driver-assistance system (ADAS) 1152 may use an array of sensors, cameras, radar, LiDAR, and/or ultrasonic devices to monitor the vehicle's surroundings, detect potential hazards, and execute or suggest corrective actions to prevent accidents and mitigate their impact.

The advanced driver-assistance system (ADAS) 1152 may be categorized into different levels of self-driving capabilities, ranging from Level 0, where the human driver performs all driving tasks, to Level 5, which represents full automation with no human intervention required under any circumstances. Levels 1 and 2 focus on driver assistance and partial automation, respectively, where systems such as adaptive cruise control, lane-keeping assistance, and automatic emergency braking support the driver but do not replace them. Level 3, conditional automation, allows the vehicle to handle all aspects of driving in certain conditions, but requires the driver to be ready to take control when needed. Level 4, high automation, enables the vehicle to operate independently in most scenarios, though human override is still possible.

Example subsystems of advanced driver-assistance system (ADAS) 1152 that contribute to these levels of automation include, but are not limited to, adaptive cruise control, which adjusts the vehicle's speed to maintain a safe distance from vehicles ahead; lane departure warning systems, which alert the driver when the vehicle begins to drift out of its lane; and automatic parking systems, which assist or take over control of the vehicle during parking maneuvers. More advanced systems, contributing to higher levels of automation, involve complex algorithms and machine learning capabilities to interpret sensor data, predict the actions of other road users, and make real-time driving decisions.

Auxiliary systems 1120 support the vehicle's functions and occupant comfort, with climate control and lighting systems as examples. The auxiliary systems 1120 may also include windshield wipers etc.

As noted above, the systems of the vehicle 1102 are communicatively connected. Communications between the interconnected systems within vehicle 1102 are facilitated through a vehicle network architecture, employing both hardware and software components to ensure seamless data exchange and coordination. This network architecture may include one or more vehicle communication buses, such as for example Controller Area Network (CAN), Local Interconnect Network (LIN), FlexRay, and Ethernet, which serve as the backbone for intra-vehicle communications.

The Controller Area Network (CAN) bus is a vehicle bus standard designed to allow microcontrollers and devices to communicate with each other within the vehicle 1102 without a host computer. Such a network may support control communications between systems such as the battery system 1106, propulsion system 1104, and control systems 1114, due to its high reliability and resistance to interference. A CAN bus may support messages that ensure real-time control and monitoring of these systems.

For other communications, such as those involving the driver interface and infotainment 1116 or auxiliary systems 1120, a Local Interconnect Network (LIN) bus may be employed. LIN may provide a cost-effective, low-speed serial communication system for connecting intelligent sensors and actuaries. It may serve as a sub-network to the CAN bus, handling signals such as switch inputs and actuator outputs.

FlexRay technology offers a higher data rate compared to CAN and LIN, providing the necessary bandwidth for advanced control systems, including those required for autonomous driving functionalities within safety systems 1118. Its deterministic nature and fault tolerance make it suitable for applications that require precise timing and synchronization, such as coordinating the actions of multiple control units in real-time.

Ethernet, with its high data transfer rate, may for example be adopted for diagnostics and infotainment applications within the vehicle 1102. It supports the rapid transfer of large volumes of data, making it well-suited for advanced driver assistance systems (ADAS), software updates, and multimedia streaming in the driver interface and infotainment 1116 system.

Software protocols and application programming interfaces (APIs) built on top of these physical layers enable high-level communication and data exchange between systems. These protocols may define the rules for data format, timing, and error handling, ensuring that messages are correctly interpreted and acted upon by the receiving systems.

In some examples, the control systems 1114 can incorporate advanced machine learning algorithms to enhance various aspects of its operation, for example in relation to charging and energy management. These algorithms may be integrated into multiple subsystems, working in concert to optimize the vehicle's performance and efficiency. The navigation system 1148 may use machine learning to predict high-speed charging locations based on the vehicle's current state of charge, driving conditions, and user preferences. This predictive capability allows the vehicle 1102 to proactively suggest high-speed charging stops along the route, even before the user explicitly sets a charging destination.

Within the charging system 1110 and battery management system (BMS) 1132, machine learning algorithms analyze patterns in energy consumption and optimize the switching between State of Energy (SOE) balancing and Open Circuit Voltage (OCV) matching strategies. These systems may learn from the vehicle's performance data, and refine decision-making processes to better manage the multiple battery systems, including for example the primary battery pack 112 and the auxiliary battery pack 128, and extend the vehicle's range.

The advanced driver-assistance system (ADAS) 1152 may leverage machine learning to optimize routes for charging efficiency. As the vehicle 1102 approaches a detected high-speed charger, these algorithms can automatically adjust the vehicle's speed and driving style to ensure the battery packs 112 and 128 reach specified temperature ranges for fast charging.

Furthermore, a dedicated charging prediction system within the control systems 1114 may use machine learning to assess whether a destination is likely to have a high-speed charger. This prediction can be based on historical data, location type, and other contextual information. By anticipating the availability of high-speed chargers, the system can preemptively trigger changes in the battery management strategy, allowing the vehicle 1102 to prepare for potential high-speed charging even before confirmation. This proactive approach contributes to reduced charging times and improved overall energy management of the primary battery pack 112 and the auxiliary battery pack 128.

### Machine 1200

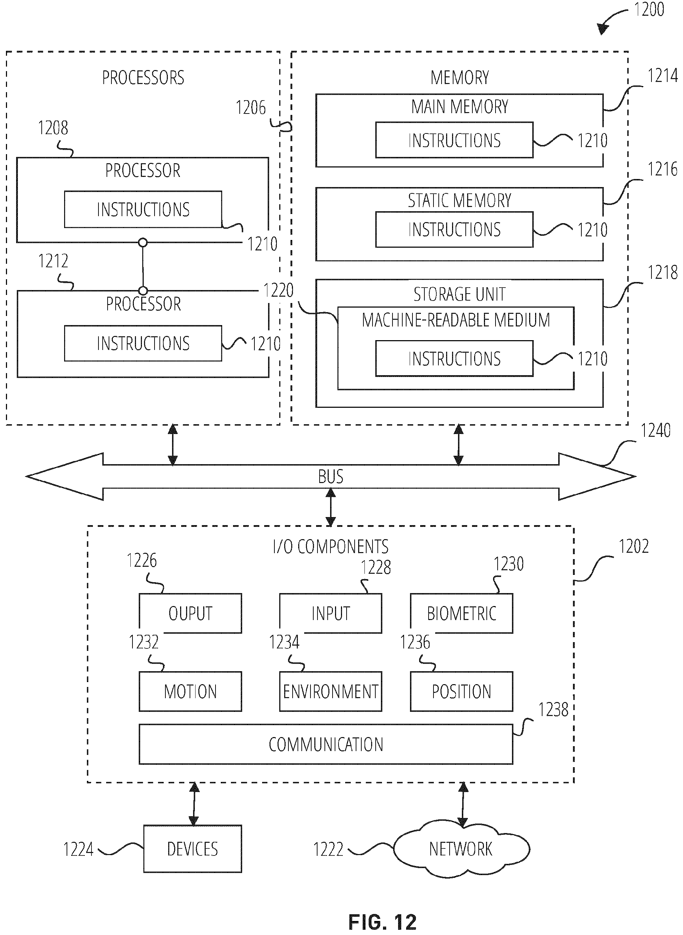

FIG. 12 is a diagrammatic representation of the machine 1200 within which instructions 1210 (e.g., software, a program, an application, an applet, an app, or other executable code) for causing the machine 1200 to perform any one or more of the methodologies discussed herein may be executed. For example, the instructions 1210 may cause the machine 1200 to execute any one or more of the methods described herein. The instructions 1210 transform the general, non-programmed machine 400 into a particular machine 1200 programmed to carry out the described and illustrated functions in the manner described. The machine 1200 may operate as a standalone device or be coupled (e.g., networked) to other machines. In a networked deployment, the machine 1200 may operate in the capacity of a server machine or a client machine in a server-client network environment, or as a peer machine in a peer-to-peer (or distributed) network environment. The machine 1200 may comprise, but not be limited to, a server computer, a client computer, a personal computer (PC), a tablet computer, a laptop computer, a netbook, a set-top box (STB), an entertainment media system, a cellular telephone, a smartphone, a mobile device, a wearable device (e.g., a smartwatch), a smart home device (e.g., a smart appliance), other smart devices, a web appliance, a network router, a network switch, a network bridge, or any machine capable of executing the instructions 1210, sequentially or otherwise, that specify actions to be taken by the machine 1200. Further, while a single machine 1200 is illustrated, the term "machine" may include a collection of machines that individually or jointly execute the instructions 1210 to perform any one or more of the methodologies discussed herein.

The machine 1200 may include processors 1204, memory 1206, and I/O components 1202, which may be configured to communicate via a bus 1240. In some examples, the processors 1204 (e.g., a Central Processing Unit (CPU), a Reduced Instruction Set Computing (RISC) Processor, a Complex Instruction Set Computing (CISC) Processor, a Graphics Processing Unit (GPU), a Digital Signal Processor (DSP), an Application-Specific Integrated Circuit (ASIC), a Radio-Frequency Integrated Circuit (RFIC), a Tensor Processing Unit (TPU), a Neural Processing Unit (NPU), a Vision Processing Unit (VPU), a Machine Learning Accelerator (MLA), a Cryptographic Acceleration Processor, a Field-Programmable Gate Array (FPGA), a Quantum Processor, another processor, or any suitable combination thereof) may include, for example, a processor 1208 and a processor 1212 that execute the instructions 1210.

Although FIG. 12 shows multiple processors 1204, the machine 1200 may include a single processor with a single core, a single processor with multiple cores (e.g., a multi-core processor), multiple processors with a single core, multiple processors with multiples cores, or any combination thereof. Modern processor architectures include superscalar, very long instruction word (VLIW), vector processor, multi-core, manycore, neuromorphic, and quantum architectures.

The memory 1206 includes a main memory 1214, a static memory 1216, and a storage unit 1218, both accessible to the processors 1204 via the bus 1240. The main memory 1206, the static memory 1216, and storage unit 1218 store the instructions 1210 embodying any one or more of the methodologies or functions described herein. The instructions 1210 may also reside, wholly or partially, within the main memory 1214, within the static memory 1216, within machine-readable medium 1220 within the storage unit 1218, within the processors 1204 (e.g., within the processor's cache memory), or any suitable combination thereof, during execution thereof by the machine 1200.

The I/O components 1202 may include various components to receive input, provide output, produce output, transmit information, exchange information, or capture measurements. The specific I/O components 1202 included in a particular machine depend on the type of machine. For example, portable machines such as mobile phones may include a touch input device or other such input mechanisms, while a headless server machine will likely not include such a touch input device. The I/O components 1202 may include many other components not shown in FIG. 12. In various examples, the I/O components 1202 may include output components 1226 and input components 1228. The output components 1226 may include visual components (e.g., a display such as a plasma display panel (PDP), a light-emitting diode (LED) display, a liquid crystal display (LCD), a projector, or a cathode ray tube (CRT)), acoustic components (e.g., speakers), haptic components (e.g., a vibratory motor, resistance mechanisms), or other signal generators. The input components 1228 may include alphanumeric input components (e.g., a keyboard, a touch screen configured to receive alphanumeric input, a photo-optical keyboard, or other alphanumeric input components), point-based input components (e.g., a mouse, a touchpad, a trackball, a joystick, a motion sensor, or another pointing instrument), tactile input components (e.g., a physical button, a touch screen that provides location and/or force of touches or touch gestures, or other tactile input components), audio input components (e.g., a microphone), and the like.

In further examples, the I/O components 1202 may include biometric components 1230, motion components 1232, environmental components 1234, or position components 1236, among a wide array of other components. For example, the biometric components 1230 could include components to detect expressions (e.g., hand gestures, facial expressions, vocal expressions, body movements, or eye tracking) or measure biosignals (e.g., heart rate, blood pressure, body temperature, perspiration, or brain waves) in an aggregate, anonymous way that does not identify individuals. Technologies like facial recognition, fingerprint identification, voice identification, retinal scanning, or electroencephalogram-based identification are of course only be implemented with explicit informed consent from users, if at all. When biometric data is collected, it is minimized, encrypted, and accessed only for authorized purposes. Users are able to opt-out of biometric collection by the biometric components 1230 and have their data permanently deleted. With proper consent, security protections, data minimization, and respect for user privacy, certain biometric components may be implemented ethically.

The motion components 1232 include acceleration sensor components (e.g., accelerometer), gravitation sensor components, rotation sensor components (e.g., gyroscope). The environmental components 1234 include, for example, one or cameras, illumination sensor components (e.g., photometer), temperature sensor components (e.g., one or more thermometers that detect ambient temperature), humidity sensor components, pressure sensor components (e.g., barometer), acoustic sensor components (e.g., one or more microphones that detect background noise), proximity sensor components (e.g., infrared sensors that detect nearby objects), gas sensors (e.g., gas detection sensors to detection concentrations of hazardous gases for safety or to measure pollutants in the atmosphere), or other components that may provide indications, measurements, or signals corresponding to a surrounding physical environment. The position components 1236 include location sensor components (e.g., a Global Positioning System (GPS) receiver component), altitude sensor components (e.g., altimeters or barometers that detect air pressure from which altitude may be derived), orientation sensor components (e.g., magnetometers), and the like.

Communication may be implemented using a wide variety of technologies. The I/O components 1202 further include communication components 1238 operable to couple the machine 1200 to a network 1222 or devices 1224 via respective coupling or connections. For example, the communication components 1238 may include a network interface Component or another suitable device to interface with the network 1222. In further examples, the communication components 1238 may include wired communication components, wireless communication components, cellular communication components, Near Field Communication (NFC) components, Bluetooth^{®} components (e.g., Bluetooth^{®} Low Energy), Wi-Fi^{®} components, and other communication components to provide communication via other modalities. The devices 1224 may be another machine or any of a wide variety of peripheral devices (e.g., a peripheral device coupled via a USB).

Moreover, the communication components 1238 may detect identifiers or include components operable to detect identifiers. For example, the communication components 1238 may include Radio Frequency Identification (RFID) tag reader components, NFC smart tag detection components, optical reader components (e.g., an optical sensor to detect one-dimensional bar codes such as Universal Product Code (UPC) bar code, multi-dimensional bar codes such as Quick Response (QR) code, Aztec code, Data Matrix, Data glyph, Maxi Code, PDF417, Ultra Code, UCC RSS-2D bar code, and other optical codes), or acoustic detection components (e.g., microphones to identify tagged audio signals). In addition, a variety of information may be derived via the communication components 1238, such as location via Internet Protocol (IP) geolocation, location via Wi-Fi^{®} signal triangulation, or location via detecting an NFC beacon signal that may indicate a particular location.

The various memories (e.g., main memory 1214, static memory 1216, and/or memory of the processors 1204) and/or storage unit 1218 may store one or more sets of instructions and data structures (e.g., software) embodying or used by any one or more of the methodologies or functions described herein. These instructions (e.g., the instructions 1210), when executed by processors 1204, cause various operations to implement the disclosed examples.

The instructions 1210 may be transmitted or received over the network 1222, using a transmission medium, via a network interface device (e.g., a network interface component included in the communication components 1238) and using any one of several well-known transfer protocols (e.g., hypertext transfer protocol (HTTP)). Similarly, the instructions 1210 may be transmitted or received using a transmission medium via a coupling (e.g., a peer-to-peer coupling) to the devices 1224.

### Examples

Example 1 is a method to manage a plurality of battery packs of an electric vehicle, the method comprising: initiating a charging process for a primary battery pack and an auxiliary battery pack; determining that an Open Circuit Voltage (OCV) of the primary battery pack matches an OCV of the auxiliary battery pack; and based on determining that the OCV of the primary battery pack matches the OCV of the auxiliary battery, connecting the primary and auxiliary battery packs in parallel and initiating parallel charging of the primary battery pack and the auxiliary battery pack.

In Example 2, the subject matter of Example 1 includes, wherein initiating the parallel charging comprises: engaging high voltage (HV) switches to connect the primary battery pack and the auxiliary battery pack in parallel based on their OCVs being matched within a predetermined threshold; and simultaneously delivering charging current to both the primary battery pack and the auxiliary battery pack through the engaged HV switches.

In Example 3, the subject matter of Examples 1-2 includes, wherein initiating the parallel charging comprises: conducting a constant voltage (CV) hold at a target voltage equal to a higher voltage pack of the primary battery pack and the auxiliary battery pack; allowing the charge current to taper below a make current capability of contactors used in the battery packs; and closing the contactors to connect the primary battery pack and the auxiliary battery pack in parallel responsive to the charge current being below the make current capability.

In Example 4, the subject matter of Examples 1-3 includes, prior to initiating the charging process, detecting that a destination of the electric vehicle is a high-speed charger; switching a battery control strategy from a State of Energy (SOE) balancing strategy to an Open Circuit Voltage (OCV) matching strategy in response to detecting the destination is set to the high-speed charger, wherein the SOE balancing strategy operatively targets an equal state of energy between the primary battery pack and the auxiliary battery pack and the OCV matching strategy actively manages discharging of the primary battery pack and the auxiliary battery pack to equalize their respective OCVs; and actively managing discharging of the primary battery pack and the auxiliary battery pack to equalize their respective OCVs.

In Example 5, the subject matter of Examples 1-4 includes, based on determining that the OCV of the primary battery pack does not match the OCV of the auxiliary battery, charging the battery pack with a lower OCV until the OCV of the primary battery pack matches an OCV of the auxiliary battery pack.

In Example 6, the subject matter of Examples 1-5 includes, wherein the charging process includes adjusting a charge current to taper below a make current capability of contactors used in the battery packs.

In Example 7, the subject matter of Examples 1-6 includes, wherein the primary and auxiliary battery packs are connected using high-voltage contactors that are controlled based on the determined matching of the OCVs of the primary and auxiliary battery packs.

In Example 8, the subject matter of Examples 1-7 includes: determining that discrepancies in charging rates exist between the primary battery pack and the auxiliary battery pack, and based on determining that discrepancies in charging rates exist, disconnecting the battery packs from parallel charging; and temporarily isolating the battery pack with a slower charging rate, while a faster charging pack continues to charge independently.

In Example 9, the subject matter of Examples 1-8 includes: monitoring at least one of current flow, voltage levels, or temperature of each of the primary battery pack and the auxiliary battery pack during the charging process; and adjusting charging parameters in real-time based on data from sensors integrated within the vehicle.

In Example 10, the subject matter of Examples 4 and 9 includes, wherein the switching of the control strategy to the OCV matching strategy comprises adjusting power electronics to tune voltage outputs of the primary battery pack and the auxiliary battery pack based on feedback from voltage sensors.

In Example 11, the subject matter of Examples 1-10 includes, further comprising using a DC-to-DC converter to at least one of step up or step down the voltage of the auxiliary battery pack to match the voltage of the primary battery pack during the charging process.

In Example 12, the subject matter of Examples 10-11 includes: dynamically adjusting the operation of the DC-to-DC converter based on real-time performance data from voltage and current sensors integrated within the primary and auxiliary battery packs; and adjusting power delivery from the auxiliary battery pack based on the main pack bus voltage to reduce losses in the DC-to-DC conversion process.

In Example 13, the subject matter of Examples 1-12 includes: determining that both battery packs have reached a predetermined charge capacity; and completing the charging process based on determining that both battery packs have reached the predetermined charge capacity.

In Example 14, the subject matter of Examples 1-13 includes, wherein the method is performed under the control of a battery management system (BMS) that includes a primary high-voltage controller and an auxiliary high-voltage controller.

In Example 15, the subject matter of Examples 1-14 includes, further comprising optimizing power delivery from the auxiliary battery pack to minimize losses in the DC-to-DC conversion process when the vehicle is navigating using a user interface and trip planner.

In Example 16, the subject matter of Examples 1-15 includes: evaluating a primary battery pack bus voltage to determine its current level; and preferentially drawing more power from the auxiliary battery pack based on the bus voltage of the primary battery pack being at a predetermined level.

Example 17 is a computer-readable medium storing instructions that, when executed by at least one processor, cause the at least one processor to perform a method to manage a plurality of battery packs of an electric vehicle, the method comprising: initiating a charging process for a primary battery pack and an auxiliary battery pack; determining that an Open Circuit Voltage (OCV) of the primary battery pack matches an OCV of the auxiliary battery pack; and based on determining that the OCV of the primary battery pack matches the OCV of the auxiliary battery, connecting the primary and auxiliary battery packs in parallel and initiating parallel charging of the primary battery pack and the auxiliary battery pack.

Example 18 is a computing apparatus comprising: at least one processor; and at least one memory storing instructions that, when executed by the processor, configure the apparatus to perform a method comprising: initiating a charging process for a primary battery pack and an auxiliary battery pack; determining that an Open Circuit Voltage (OCV) of the primary battery pack matches an OCV of the auxiliary battery pack; and based on determining that the OCV of the primary battery pack matches the OCV of the auxiliary battery, connecting the primary and auxiliary battery packs in parallel and initiating parallel charging of the primary battery pack and the auxiliary battery pack.

Example 19 is a method to manage battery charging in an electric vehicle, comprising: initiating a charging process for a first battery pack and a second battery pack; determining that an Open Circuit Voltage (OCV) of the first battery pack matches an OCV of the second battery pack; and based on determining that the OCV of the first battery pack matches the OCV of the second battery pack, connecting the first and second battery packs in parallel and initiating parallel charging of the first battery pack and the second battery pack.

In Example 20, the subject matter of Example 19 includes, based on determining that the OCVs do not match, charging the battery pack with a lower OCV until the OCV of the first battery pack matches an OCV of the second battery pack.

In Example 21, the subject matter of Examples 19-20 includes, wherein determining that the OCV of the first battery pack matches the OCV of the second battery pack includes measuring the voltage levels of each of the first battery pack and the second battery pack and comparing the voltage levels to determine that a voltage differential is within a threshold range compatibility for parallel charging.

In Example 22, the subject matter of Examples 19-21 includes, further comprising conducting a constant voltage (CV) hold at a target voltage equal to the higher voltage pack before connecting the battery packs in parallel.

In Example 23, the subject matter of Examples 19-22 includes, wherein the charging process includes adjusting a charge current to taper below the make current capability of contactors used in the battery packs.

In Example 24, the subject matter of Examples 19-23 includes, wherein the parallel charging is managed by a control system that monitors the voltage and temperature of each battery pack during the charging process.

In Example 25, the subject matter of Examples 19-24 includes, wherein the first and second battery packs are connected using high-voltage contactors that are controlled based on the determined matching of the OCVs.

In Example 26, the subject matter of Examples 19-25 includes, further comprising determining that discrepancies in charging rates exist, and based on this determination, disconnecting the battery packs from parallel charging.

In Example 27, the subject matter of Examples 19-26 includes, wherein the battery pack with the slower charging rate is temporarily isolated, and the faster charging pack continues to charge independently.

In Example 28, the subject matter of Examples 19-27 includes, further comprising determining that both battery packs have reached a predetermined charge capacity and completing the charging process based on this determination.

In Example 29, the subject matter of Examples 19-28 includes, wherein the method is performed under the control of a battery management system (BMS) that includes a first high-voltage controller and a second high-voltage controller.

Example 30 is a method to manage battery voltage during navigation to a high-speed charger in an electric vehicle having a first battery pack and a second battery pack, the method comprising: detecting that a destination is set to a high-speed charger; switching a control strategy from State of Energy (SOE) balancing to Open Circuit Voltage (OCV) matching in response to detecting the destination is set to the high-speed charger; actively managing discharging of the first battery pack and the second battery pack to equalize their respective OCVs; and engaging high voltage (HV) switches to connect the first battery pack and the second battery pack in parallel responsive to their respective OCVs being equalized.

In Example 31, the subject matter of Example 30 includes: monitoring at least one of current flow, voltage levels, or temperature of each of the first battery pack and the second battery pack during the discharging process; and adjusting discharging parameters in real-time based on data from sensors integrated within the vehicle.

In Example 32, the subject matter of Examples 30-31 includes, wherein the control strategy switch to OCV matching comprises adjusting power electronics to tune voltage outputs of the first battery pack and the second battery pack based on feedback from voltage sensors.

In Example 33, the subject matter of Examples 30-32 includes, further comprising engaging the HV switches to connect the first battery pack and the second battery pack in parallel when the voltage levels are synchronized within a predetermined threshold.

In Example 34, the subject matter of Examples 30-33 includes, further comprising engaging a thermal management system to regulate the temperature of the first battery pack and the second battery pack during the discharging process.

In Example 35, the subject matter of Examples 30-34 includes, wherein the high voltage (HV) switches are engaged to connect the first battery pack and the second battery pack in parallel based on the voltage difference between the battery packs being within a predetermined threshold.

In Example 36, the subject matter of Examples 30-35 includes, further comprising using a DC-to-DC converter to step up or step down the voltage of the second battery pack to match the voltage of the first battery pack during the discharging process.

In Example 37, the subject matter of Examples 30-36 includes, further comprising dynamically adjusting the operation of the DC-to-DC converter based on real-time performance data from voltage and current sensors integrated within the first and second battery packs.

In Example 38, the subject matter of Examples 30-37 includes, further comprising adjusting power delivery from the second battery pack based on the first pack bus voltage to reduce losses in the DC-to-DC conversion process.

In Example 39, the subject matter of Examples 30-38 includes, further comprising adjusting settings of the DC-to-DC converter to align with a discharge strategy based on the first pack bus voltage.

In Example 40, the subject matter of Examples 30-39 includes, further comprising delivering optimized power from the second battery pack to the vehicle's systems during travel to the destination.

Example 41 is a method to exchange electrical energy between a range extender and a main battery pack of a vehicle, the method comprising: receiving a first voltage with a first voltage level from an auxiliary battery pack within the range extender; using a first power converter, converting the first voltage to a second voltage with a second voltage level compatible with the main battery pack of the vehicle; and delivering the second voltage to the main battery pack to facilitate energy transfer.

In Example 42, the subject matter of Example 41 includes, further comprising paralleling the first power converter with a second power converter to increase power transfer between the main and auxiliary battery packs.

In Example 43, the subject matter of Examples 41-42 includes, wherein the paralleling of the first and second power converters is based on load conditions.

In Example 44, the subject matter of Examples 41-43 includes, wherein the first and the second power converters each operatively step up the first voltage from the auxiliary battery pack to the second voltage level compatible with the main battery pack.

In Example 45, the subject matter of Examples 41-44 includes, wherein the first and the second power converters each operate bidirectionally to allow for both charging of the auxiliary battery pack from the main battery pack and discharging from the auxiliary battery pack to the main battery pack.

In Example 46, the subject matter of Examples 41-45 includes, further comprising utilizing control logic within the range extender to manage the converting of the first voltage to a second voltage based on at least one of a state of charge of each of the main battery pack and the auxiliary battery pack.

In Example 47, the subject matter of Examples 41-46 includes, further comprising using a bypass contactor to enable charging of the auxiliary battery pack from a charger that bypasses the first power converter.

Example 48 is a range extender for a vehicle, comprising: an auxiliary battery pack; a first bidirectional power converter to: enable charging of the auxiliary battery pack at a first voltage, and enable discharge of the auxiliary battery pack by converting the first voltage from the auxiliary battery pack to a second voltage suitable for a main battery pack of the vehicle; and a control system to manage operation of the power converter.

In Example 49, the subject matter of Example 48 includes, wherein the first bidirectional power converter comprises a DC-to-DC converter.

In Example 50, the subject matter of Examples 48-49 includes, wherein the first bidirectional power converter is capable of both DC-to-DC conversion and AC-to-DC conversion.

In Example 51, the subject matter of Examples 48-50 includes, wherein an AC port of the first bidirectional power converter is coupled to the auxiliary battery pack, and a DC port is coupled to the main battery pack.

In Example 52, the subject matter of Examples 48-51 includes, further comprising the first bidirectional power converter and a second bidirectional power converter coupled in parallel to increase power transfer capabilities from the auxiliary battery pack.

In Example 53, the subject matter of Examples 48-52 includes, further comprising a bypass contactor to enable charging of the auxiliary battery pack from a charger that bypasses the first bidirectional power converter.

In Example 54, the subject matter of Examples 48-53 includes, wherein the control system dynamically adjusts the charging and discharging rates based on the state of charge of the auxiliary battery pack.

Example 55 is an auxiliary battery pack for an electric vehicle, the auxiliary battery pack comprising: an auxiliary battery; at least two DC-to-DC converters connected in parallel, each to manage the flow of electricity between the auxiliary battery and a primary battery pack of the electric vehicle; and a control system to dynamically adjust the operation of the DC-to-DC converters based on real-time data from at least one of voltage, current, and temperature sensors.

In Example 56, the subject matter of Example 55 includes, wherein each DC-to-DC converter is part of a respective power converter system.

In Example 57, the subject matter of Examples 55-56 includes, wherein each power converter system operates in a bidirectional mode to allow power transfer in both directions between the auxiliary battery and the primary battery pack.

In Example 58, the subject matter of Examples 55-57 includes, wherein each power converter system includes a thermal management system to regulate the temperature of the DC-to-DC converters.

In Example 59, the subject matter of Examples 55-58 includes, further comprising a thermal management system to regulate temperatures of the auxiliary battery and the DC-to-DC converters.

In Example 60, the subject matter of Examples 55-59 includes, wherein the thermal management system includes a coolant heat exchanger to transfer heat between the auxiliary battery and the primary battery pack.

In Example 61, the subject matter of Examples 55-60 includes, wherein the control system is to optimize the power delivery from the auxiliary battery based on the state of energy (SOE) and Open Circuit Voltage (OCV) of the auxiliary battery and the primary battery pack.

In Example 62, the subject matter of Examples 55-61 includes, further comprising high voltage (HV) switches to connect the auxiliary battery and the primary battery pack in parallel based on respective voltages being matched, allowing simultaneous power delivery from both battery packs.

In Example 63, the subject matter of Examples 55-62 includes, wherein the control system includes a state machine to manage the power delivery and charging processes based on real-time data from voltage, current, and temperature sensors.

Example 64 is an apparatus for managing power delivery in an electric vehicle, comprising: a first battery pack; a second battery pack configured as a range extender; and a control system to adjust power output from the second battery pack based on a ratio of remaining energy in the second battery pack to total remaining energy in both the first battery pack and the second battery pack.

In Example 65, the subject matter of Example 64 includes, wherein the control system is to dynamically calculate the power output adjustment based on real-time energy requirements of the vehicle.

In Example 66, the subject matter of Examples 64-65 includes, further comprising a first high-voltage controller and a second high-voltage controller to communicate and regulate power transfer between the first and second battery packs.

In Example 67, the subject matter of Examples 64-66 includes, wherein the first high-voltage controller and the second high-voltage controller modulate associated power converters to adjust voltage and current according to calculated power needs.

In Example 68, the subject matter of Examples 64-67 includes, further comprising a power converter for the second battery pack, wherein the control system is to determine that the power demand exceeds the output capability of the power converter.

In Example 69, the subject matter of Examples 64-68 includes, wherein the control system is to maximize the power output from the second battery pack based on the power demand exceeding the output capability of the power converter.

In Example 70, the subject matter of Examples 64-69 includes, wherein the control system is to equalize the State of Energy (SOE) between the first and second battery packs based on the power demand being within the output capability of the power converter.

In Example 71, the subject matter of Examples 64-70 includes, wherein the control system is to monitor SOE divergence between the first and second battery packs.

In Example 72, the subject matter of Examples 64-71 includes, wherein the control system is to compensate for the SOE divergence by increasing the power output from the second battery pack during periods of lower power demand.

In Example 73, the subject matter of Examples 64-72 includes, wherein the increase in power output from the second battery pack is calculated based on an amount of the SOE divergence and a current capacity of the first battery pack.

In Example 74, the subject matter of Examples 64-73 includes, wherein the control system is to scale the power output adjustment proportionally based on remaining energy in the second battery pack relative to the combined remaining energy in both battery packs.

In Example 75, the subject matter of Examples 64-74 includes, wherein the control system is to manage the first and second battery packs to maintain balanced energy usage to optimize vehicle performance and energy efficiency.

In Example 76, the subject matter of Examples 64-75 includes, wherein the second high-voltage controller is to calculate the required power output based on real-time vehicle performance data.

In Example 77, the subject matter of Examples 64-76 includes, wherein the first battery pack and the second battery pack are to synchronize their discharge rates under the control of the high-voltage controllers.

Example 78 is a method to manage power delivery and charging in an electric vehicle having a first battery pack and a second battery pack, the method comprising: implementing a control system using a state machine to manage the power delivery and charging processes based on data from at least one of voltage, current, or temperature sensors; using the state machine, adjusting the power output from the second battery pack based on state of energy (SOE) and Open Circuit Voltage (OCV) of the battery packs; and using the state machine, managing charging process by dynamically switching between SOE control and OCV control based on the vehicle's operating conditions.

In Example 79, the subject matter of Example 78 includes, wherein the state machine includes states for unnavigated driving, high-speed charging, and preconditioning of the battery packs.

In Example 80, the subject matter of Examples 78-79 includes, further comprising preconditioning the second battery pack by operating a DC-to-DC converter to at least one of heat or cool the second battery pack to a determined temperature range for power transfer.

In Example 81, the subject matter of Examples 78-80 includes, wherein the state machine dynamically adjusts the operation of power conversion systems based on real-time performance data from voltage and current sensors integrated within the battery packs.

In Example 82, the subject matter of Examples 78-81 includes, further comprising engaging high voltage (HV) switches to connect the first battery pack and the second battery pack in parallel based on their voltages being matched, allowing simultaneous power delivery from both battery packs.

In Example 83, the subject matter of Examples 78-82 includes, further comprising using a thermal management system including a liquid-to-liquid heat exchanger to transfer heat between the first battery pack and the second battery pack.

In Example 84, the subject matter of Examples 78-83 includes, further comprising charging the second battery pack using solar power via an MC4 connector.

In Example 85, the subject matter of Examples 78-84 includes, wherein the power conversion systems are configured to boost or buck voltage during regenerative braking.

Example 86 is a computing apparatus comprising: at least one processor; and at least one memory storing instructions that, when executed by the processor, configure the apparatus to perform a method of Example 78.

Example 87 is a computing apparatus comprising: at least one processor; and at least one memory storing instructions that, when executed by the processor, configure the apparatus to perform a method comprising: implementing a control system using a state machine to manage the power delivery and charging processes based on data from at least one of voltage, current, or temperature sensors; using the state machine, adjusting the power output from the second battery pack based on state of energy (SOE) and Open Circuit Voltage (OCV) of the battery packs; and using the state machine, managing charging process by dynamically switching between SOE control and OCV control based on the vehicle's operating conditions.

Example 88 is a computer-readable medium on which computer-executable instructions are stored to implement a method comprising: implementing a control system using a state machine to manage the power delivery and charging processes based on data from at least one of voltage, current, or temperature sensors; using the state machine, adjusting the power output from the second battery pack based on state of energy (SOE) and Open Circuit Voltage (OCV) of the battery packs; and using the state machine, managing charging process by dynamically switching between SOE control and OCV control based on the vehicle's operating conditions.

### Glossary

"Component" may include a device, physical entity, or logic having boundaries defined by function or subroutine calls, branch points, APIs, or other technologies that provide for the partitioning or modularization of particular processing or control functions. Components may be combined via their interfaces with other components to carry out a machine process. A component may be a packaged functional hardware unit designed for use with other components and a part of a program that usually performs a particular function of related functions. Components may constitute either software components (e.g., code embodied on a machine-readable medium) or hardware components. A "hardware component" is a tangible unit capable of performing certain operations and may be configured or arranged in a certain physical manner In some examples, one or more computer systems (e.g., a standalone computer system, a client computer system, or a server computer system) or one or more hardware components of a computer system (e.g., a processor or a group of processors) may be configured by software (e.g., an application or application portion) as a hardware component that operates to perform certain operations as described herein. A hardware component may also be implemented mechanically, electronically, or any suitable combination thereof. For example, a hardware component may include dedicated circuitry or logic that is permanently configured to perform certain operations. A hardware component may be a special-purpose processor, such as a field-programmable gate array (FPGA) or an application-specific integrated circuit (ASIC).A hardware component may also include programmable logic or circuitry that is temporarily configured by software to perform certain operations. For example, a hardware component may include software executed by a general-purpose processor or other programmable processor. Once configured by such software, hardware components become specific machines (or specific components of a machine) uniquely tailored to perform the configured functions and are no longer general-purpose processors. A decision to implement a hardware component mechanically, in dedicated and permanently configured circuitry, or in temporarily configured circuitry (e.g., configured by software), may be driven by cost and time considerations. Accordingly, the phrase "hardware component"(or "hardware-implemented component") should be understood to encompass a tangible entity, be that an entity that is physically constructed, permanently configured (e.g., hardwired), or temporarily configured (e.g., programmed) to operate in a certain manner or to perform certain operations described herein. Considering examples in which hardware components are temporarily configured (e.g., programmed), each of the hardware components need not be configured or instantiated at any one instance in time. For example, where a hardware component comprises a general-purpose processor configured by software to become a special-purpose processor, the general-purpose processor may be configured as different special-purpose processors (e.g., comprising different hardware components) at different times. Software accordingly configures a particular processor or processors, for example, to constitute a particular hardware component at one instance of time and to constitute a different hardware component at a different instance of time. Hardware components can provide information to, and receive information from, other hardware components. Accordingly, the described hardware components may be regarded as being communicatively coupled. Where multiple hardware components exist contemporaneously, communications may be achieved through signal transmission (e.g., over appropriate circuits and buses) between or among two or more of the hardware components. **In** examples in which multiple hardware components are configured or instantiated at different times, communications between such hardware components may be achieved, for example, through the storage and retrieval of information in memory structures to which the multiple hardware components have access. For example, one hardware component may perform an operation and store the output of that operation in a memory device to which it is communicatively coupled. A further hardware component may then, at a later time, access the memory device to retrieve and process the stored output. Hardware components may also initiate communications with input or output devices, and can operate on a resource (e.g., a collection of information). The various operations of example methods described herein may be performed, at least partially, by one or more processors that are temporarily configured (e.g., by software) or permanently configured to perform the relevant operations. Whether temporarily or permanently configured, such processors may constitute processor-implemented components that operate to perform one or more operations or functions described herein. As used herein, "processor-implemented component" refers to a hardware component implemented using one or more processors. Similarly, the methods described herein may be at least partially processor-implemented, with a particular processor or processors being an example of hardware. For example, at least some of the operations of methods described herein may be performed by one or more processors 1004 or processor-implemented components. Moreover, the one or more processors may also operate to support performance of the relevant operations in a "cloud computing" environment or as a "software as a service" (SaaS).For example, at least some of the operations may be performed by a group of computers (as examples of machines including processors), with these operations being accessible via a network (e.g., the Internet) and via one or more appropriate interfaces (e.g., an API).The performance of certain of the operations may be distributed among the processors, not only residing within a single machine, but deployed across a number of machines. In some examples, the processors or processor-implemented components may be located in a single geographic location (e.g., within a home environment, an office environment, or a server farm).In some examples, the processors or processor-implemented components may be distributed across a number of geographic locations.

"High-speed charger" may include an electric vehicle charging station capable of delivering direct current (DC) power at high-voltage and amperage levels, typically providing 50 kW or more of charging power. These chargers may be designed to rapidly replenish an electric vehicle's battery, significantly reducing charging times compared to lower-power alternatives. High-speed chargers may operate at voltage levels of 400 to 900 volts DC or higher, for example.

"Open Circuit Voltage (OCV)" refers to the voltage measured across the terminals of the battery pack when it is not connected to any load or charging source. It represents the potential difference between the positive and negative terminals of the battery pack in its resting state.

"Processor" may include, in some examples, one or more circuits or virtual circuits (e.g., a physical circuit emulated by logic executing on an actual processor) that manipulates data values according to control signals (e.g., commands, opcodes, machine code, control words, macroinstructions, etc.) and which produces corresponding output signals that are applied to operate a machine. A processor may, for example, include at least one of a Central Processing Unit (CPU), a Reduced Instruction Set Computing (RISC) processor, a Complex Instruction Set Computing (CISC) processor, a Graphics Processing Unit (GPU), a Digital Signal Processor (DSP), a Tensor Processing Unit (TPU), a Neural Processing Unit (NPU), a Vision Processing Unit (VPU), a Machine Learning Accelerator, an Artificial Intelligence Accelerator, an Application Specific Integrated Circuit (ASIC), a Field Programmable Gate Array (FPGA), a Radio-Frequency Integrated Circuit (RFIC), a neuromorphic processor, a quantum processor, or any combination thereof.

A processor may further be a multi-core processor having two or more independent processors (sometimes referred to as "cores") that may execute instructions contemporaneously. Multi-core processors contain multiple computational cores on a single integrated circuit die, each of which can independently execute program instructions in parallel. Parallel processing on multi-core processors may be implemented via architectures like superscalar, VLIW, vector processing, or SIMD that allow each core to run separate instruction streams concurrently.

A processor may be emulated in software, running on a physical processor, as a virtual processor or virtual circuit. The virtual processor may behave like an independent processor but is implemented in software rather than hardware.

Further examples are set out in the clauses below:
1. A method to manage a plurality of battery packs of an electric vehicle, the method comprising:
   initiating a charging process for a primary battery pack and an auxiliary battery pack;
   determining that an Open Circuit Voltage (OCV) of the primary battery pack matches an OCV of the auxiliary battery pack; and
   based on determining that the OCV of the primary battery pack matches the OCV of the auxiliary battery, connecting the primary and auxiliary battery packs in parallel and initiating parallel charging of the primary battery pack and the auxiliary battery pack.
2. The method of clause 1, wherein initiating the parallel charging comprises:
   engaging high-voltage (HV) switches to connect the primary battery pack and the auxiliary battery pack in parallel based on their OCVs being matched within a predetermined threshold range; and
   simultaneously delivering charging current to both the primary battery pack and the auxiliary battery pack through the engaged HV switches.
3. The method of any one of the preceding clauses, wherein initiating the parallel charging comprises:
   conducting a constant voltage (CV) hold at a target voltage equal to a higher voltage pack of the primary battery pack and the auxiliary battery pack ;
   allowing the charge current to taper below a make current capability of contactors used in the battery packs; and
   closing the contactors to connect the primary battery pack and the auxiliary battery pack in parallel responsive to the charge current being below the make current capability.
4. The method of any one of the preceding clauses, further comprising:
   prior to initiating the charging process, detecting that a destination of the electric vehicle is a high-speed charger;
   switching a battery control strategy from a State of Energy (SOE) balancing strategy to an Open Circuit Voltage (OCV) matching strategy in response to detecting the destination is set to the high-speed charger, wherein the SOE balancing strategy operatively targets an equal state of energy between the primary battery pack and the auxiliary battery pack and the OCV matching strategy actively manages discharging of the primary battery pack and the auxiliary battery pack to equalize their respective OCVs; and
   actively managing discharging of the primary battery pack and the auxiliary battery pack to equalize their respective OCVs.
5. The method of any one of the preceding clauses, comprising, based on determining that the OCV of the primary battery pack does not match the OCV of the auxiliary battery, charging the battery pack with a lower OCV until the OCV of the primary battery pack matches an OCV of the auxiliary battery pack.
6. The method of any one of the preceding clauses, wherein the charging process includes adjusting a charge current to taper below a make current capability of contactors used in the battery packs.
7. The method of any one of the preceding clauses, wherein the primary and auxiliary battery packs are connected using high-voltage contactors that are controlled based on the determined matching of the OCVs of the primary and auxiliary battery packs.
8. The method of any one of the preceding clauses, further comprising:
   determining that discrepancies in charging rates exist between the primary battery pack and the auxiliary battery pack, and based on determining that discrepancies in charging rates exist, disconnecting the battery packs from parallel charging; and
   temporarily isolating the battery pack with a slower charging rate, while a faster charging pack continues to charge independently.
9. The method of any one of the preceding clauses, further comprising:
   monitoring at least one of current flow, voltage levels, or temperature of each of the primary battery pack and the auxiliary battery pack during the charging process; and
   adjusting charging parameters in real-time based on data from sensors integrated within the vehicle.
10. The method of clause 4, wherein the switching of the control strategy to the OCV matching strategy comprises adjusting power electronics to tune voltage outputs of the primary battery pack and the auxiliary battery pack based on feedback from voltage sensors.
11. The method of any one of the preceding clauses, further comprising using a DC-to-DC converter to at least one of step up or step down the voltage of the auxiliary battery pack to match the voltage of the primary battery pack during the charging process.
12. The method of clause 10, further comprising:
   dynamically adjusting the operation of the DC-to-DC converter based on real-time performance data from voltage and current sensors integrated within the primary and auxiliary battery packs; and
   adjusting power delivery from the auxiliary battery pack based on the main pack bus voltage to reduce losses in the DC-to-DC conversion process.
13. The method of any one of the preceding clauses, further comprising:
   determining that both battery packs have reached a predetermined charge capacity; and completing the charging process based on determining that both battery packs have reached the predetermined charge capacity.
14. The method of any one of the preceding clauses, wherein the method is performed under the control of a battery management system (BMS) that includes a primary high-voltage controller and an auxiliary high-voltage controller.
15. The method of any one of the preceding clauses, further comprising optimizing power delivery from the auxiliary battery pack to minimize losses in the DC-to-DC conversion process when the vehicle is navigating using a user interface and trip planner.
16. The method of any one of the preceding clauses, further comprising:
   evaluating a primary battery pack bus voltage to determine its current level; and
   preferentially drawing more power from the auxiliary battery pack based on the bus voltage of the primary battery pack being at a predetermined level.
17. A computer-readable medium storing instructions that, when executed by at least one processor, cause the at least one processor to perform a method to manage a plurality of battery packs of an electric vehicle, the method comprising:
   initiating a charging process for a primary battery pack and an auxiliary battery pack;
   determining that an Open Circuit Voltage (OCV) of the primary battery pack matches an OCV of the auxiliary battery pack; and
   based on determining that the OCV of the primary battery pack matches the OCV of the auxiliary battery, connecting the primary and auxiliary battery packs in parallel and initiating parallel charging of the primary battery pack and the auxiliary battery pack.
18. The computer-readable medium storing instructions of clause 17, wherein the method further comprises:
   engaging high-voltage (HV) switches to connect the primary battery pack and the auxiliary battery pack in parallel based on their OCVs being matched within a predetermined threshold range; and
   simultaneously delivering charging current to both the primary battery pack and the auxiliary battery pack through the engaged HV switches.
19. A computing apparatus comprising:
   at least one processor; and
   at least one memory storing instructions that, when executed by the processor, configure the apparatus to perform a method comprising:
      initiating a charging process for a primary battery pack and an auxiliary battery pack;
      determining that an Open Circuit Voltage (OCV) of the primary battery pack matches an OCV of the auxiliary battery pack; and
      based on determining that the OCV of the primary battery pack matches the OCV of the auxiliary battery, connecting the primary and auxiliary battery packs in parallel and initiating parallel charging of the primary battery pack and the auxiliary battery pack.
20. The computing apparatus of clause 19, wherein the method further comprises:
   prior to initiating the charging process, detecting that a destination of the electric vehicle is a high-speed charger;
   switching a battery control strategy from a State of Energy (SOE) balancing strategy to Open Circuit Voltage (OCV) matching strategy in response to detecting the destination is set to the high-speed charger, wherein the SOE balancing strategy operatively targets an equal state of energy between the primary battery pack and the auxiliary battery pack and the OCV matching strategy actively manages discharging of the primary battery pack and the auxiliary battery pack to equalize their respective OCVs; and
   actively managing discharging of the primary battery pack and the auxiliary battery pack to equalize their respective OCVs.

## Claims

**1.** A method to manage a plurality of battery packs of an electric vehicle, the method comprising:
initiating a charging process for a primary battery pack and an auxiliary battery pack;
determining that an Open Circuit Voltage (OCV) of the primary battery pack matches an OCV of the auxiliary battery pack; and
based on determining that the OCV of the primary battery pack matches the OCV of the auxiliary battery, connecting the primary and auxiliary battery packs in parallel and initiating parallel charging of the primary battery pack and the auxiliary battery pack.

**2.** The method of claim 1, wherein initiating the parallel charging comprises:
engaging high-voltage (HV) switches to connect the primary battery pack and the auxiliary battery pack in parallel based on their OCVs being matched within a predetermined threshold range; and
simultaneously delivering charging current to both the primary battery pack and the auxiliary battery pack through the engaged HV switches.

**3.** The method of any one of the preceding claims, wherein initiating the parallel charging comprises:
conducting a constant voltage (CV) hold at a target voltage equal to a higher voltage pack of the primary battery pack and the auxiliary battery pack ;
allowing the charge current to taper below a make current capability of contactors used in the battery packs; and
closing the contactors to connect the primary battery pack and the auxiliary battery pack in parallel responsive to the charge current being below the make current capability.

**4.** The method of any one of the preceding claims, further comprising:
prior to initiating the charging process, detecting that a destination of the electric vehicle is a high-speed charger;
switching a battery control strategy from a State of Energy (SOE) balancing strategy to an Open Circuit Voltage (OCV) matching strategy in response to detecting the destination is set to the high-speed charger, wherein the SOE balancing strategy operatively targets an equal state of energy between the primary battery pack and the auxiliary battery pack and the OCV matching strategy actively manages discharging of the primary battery pack and the auxiliary battery pack to equalize their respective OCVs; and
actively managing discharging of the primary battery pack and the auxiliary battery pack to equalize their respective OCVs.

**5.** The method of any one of the preceding claims, comprising, based on determining that the OCV of the primary battery pack does not match the OCV of the auxiliary battery, charging the battery pack with a lower OCV until the OCV of the primary battery pack matches an OCV of the auxiliary battery pack.

**6.** The method of any one of the preceding claims, wherein the charging process includes adjusting a charge current to taper below a make current capability of contactors used in the battery packs.

**7.** The method of any one of the preceding claims, wherein the primary and auxiliary battery packs are connected using high-voltage contactors that are controlled based on the determined matching of the OCVs of the primary and auxiliary battery packs.

**8.** The method of any one of the preceding claims, further comprising:
determining that discrepancies in charging rates exist between the primary battery pack and the auxiliary battery pack, and based on determining that discrepancies in charging rates exist, disconnecting the battery packs from parallel charging; and
temporarily isolating the battery pack with a slower charging rate, while a faster charging pack continues to charge independently.

**9.** The method of any one of the preceding claims, further comprising:
monitoring at least one of current flow, voltage levels, or temperature of each of the primary battery pack and the auxiliary battery pack during the charging process; and
adjusting charging parameters in real-time based on data from sensors integrated within the vehicle.

**10.** The method of claim 4, wherein the switching of the control strategy to the OCV matching strategy comprises adjusting power electronics to tune voltage outputs of the primary battery pack and the auxiliary battery pack based on feedback from voltage sensors.

**11.** The method of any one of the preceding claims, further comprising using a DC-to-DC converter to at least one of step up or step down the voltage of the auxiliary battery pack to match the voltage of the primary battery pack during the charging process.

**12.** The method of claim 10, further comprising:
dynamically adjusting the operation of the DC-to-DC converter based on real-time performance data from voltage and current sensors integrated within the primary and auxiliary battery packs; and
adjusting power delivery from the auxiliary battery pack based on the main pack bus voltage to reduce losses in the DC-to-DC conversion process; or optionally
further comprising:
determining that both battery packs have reached a predetermined charge capacity; and
completing the charging process based on determining that both battery packs have reached the predetermined charge capacity; or optionally
wherein the method is performed under the control of a battery management system (BMS) that includes a primary high-voltage controller and an auxiliary high-voltage controller; or optionally
further comprising optimizing power delivery from the auxiliary battery pack to minimize losses in the DC-to-DC conversion process when the vehicle is navigating using a user interface and trip planner; or optionally
further comprising:
evaluating a primary battery pack bus voltage to determine its current level; and
preferentially drawing more power from the auxiliary battery pack based on the bus voltage of the primary battery pack being at a predetermined level.

**12.** A computer-readable medium storing instructions that, when executed by at least one processor, cause the at least one processor to perform a method to manage a plurality of battery packs of an electric vehicle, the method comprising:
initiating a charging process for a primary battery pack and an auxiliary battery pack;
determining that an Open Circuit Voltage (OCV) of the primary battery pack matches an OCV of the auxiliary battery pack; and
based on determining that the OCV of the primary battery pack matches the OCV of the auxiliary battery, connecting the primary and auxiliary battery packs in parallel and initiating parallel charging of the primary battery pack and the auxiliary battery pack.

**13.** The computer-readable medium storing instructions of claim 17, wherein the method further comprises:
engaging high-voltage (HV) switches to connect the primary battery pack and the auxiliary battery pack in parallel based on their OCVs being matched within a predetermined threshold range; and
simultaneously delivering charging current to both the primary battery pack and the auxiliary battery pack through the engaged HV switches.

**14.** A computing apparatus comprising:
at least one processor; and
at least one memory storing instructions that, when executed by the processor, configure the apparatus to perform a method comprising:
initiating a charging process for a primary battery pack and an auxiliary battery pack;
determining that an Open Circuit Voltage (OCV) of the primary battery pack matches an OCV of the auxiliary battery pack; and
based on determining that the OCV of the primary battery pack matches the OCV of the auxiliary battery, connecting the primary and auxiliary battery packs in parallel and initiating parallel charging of the primary battery pack and the auxiliary battery pack.

**15.** The computing apparatus of claim 19, wherein the method further comprises:
prior to initiating the charging process, detecting that a destination of the electric vehicle is a high-speed charger;
switching a battery control strategy from a State of Energy (SOE) balancing strategy to Open Circuit Voltage (OCV) matching strategy in response to detecting the destination is set to the high-speed charger, wherein the SOE balancing strategy operatively targets an equal state of energy between the primary battery pack and the auxiliary battery pack and the OCV matching strategy actively manages discharging of the primary battery pack and the auxiliary battery pack to equalize their respective OCVs; and
actively managing discharging of the primary battery pack and the auxiliary battery pack to equalize their respective OCVs.
